# EUROPEAN PATENT APPLICATION

(11) **EP 4 122 650 A1**
(43) Date of publication of application: **25.01.2023**
(21) Application number: 21187305.4
(22) Date of filing: 22.07.2021
(51) Int. Cl.: B25J 5/00, B25J 19/02

(54) **MOBILE ROBOT WITH IMPROVED SAFETY**

(71) Applicant: Magazino GmbH, 80687 München (DE)
(72) Inventor: FRANKE, Kai, 80687 München (DE); ZANGER, Lukas, 80634 München (DE)
(74) Representative: Stellbrink & Partner Patentanwälte mbB

(57) **Abstract**

Disclosed is a robot, comprising a housing, at least one manipulator, a control system configured for controlling the manipulator, a safety volume enclosed at least by a surface set comprising at least one boundary surface, a boundary sensor system, and a mobile base. Further, a system comprising such a robot, a method for operating a corresponding robot and a computer program product are disclosed.

## Description

The present invention relates to the field of mobile robots, more particularly to mobile robots for operation next to humans.

For operating robots in an environment where humans may be present, operations of the robot may result in accidents and potential injuries of the human operators. These risks result from different sources.

Mobile robots often comprise a mobile base and at least one manipulator mounted thereto. Risks due to the movement of the mobile base, i.e., of the robot as a whole, are for example mitigated by the use of obstacle sensors. If one of the obstacle sensors senses an obstacle, such as a human that the robot may collide with, a control system of the robot may trigger a deceleration or stop of the robot. Further, mechanically triggered bumpers may be used to detect collisions of the robot. A corresponding robot is discussed in European Patent Application 1615220.7, which is incorporated by reference in its entirety.

However, apart from movement of the robot as a whole, dangers may also arise from an operation of moving parts of the robot, such as a manipulator or moving parts of a housing. Particular dangers may arise at locations where the robot interacts with the environment, e.g. picks or puts items such as boxes or containers.

In the prior art, when robots move in proximity of humans, moving parts inside of the robot, such as the manipulator storing the picked boxes in a storage unit of the robot, may pose a risk to nearby humans. Therefore, mobile robots often comprise a housing, the housing enclosing volumes in which parts are moving at least sometimes, e.g. the storage unit. However, for error resolution, in the example of the storage unit e.g. due to damaged or lost boxes, or technical problems, or for maintenance, the housing needs to be opened, which may be cumbersome.

For separating humans from a manipulator that extends outside of a housing of the robot, the housing may comprise moving parts, such as an automated door or the like configured to open before the manipulator accesses an area outside of the robot. An automated door does however result in further moving parts. Also, as in the above case, the housing with the door obstructs an access to the inside of the robot for error resolution and maintenance, requiring the door to be opened, which may be non-trivial e.g. in case of electrical problems. Further, when closing, a door may lead to risks for nearby humans, e.g. crushing risks or draw in-risks.

Further, a physical housing may be inflexible with respect to dimensions of the manipulator and/or an operating scheme of the robot, e.g. a structure or geometry of locations where the robot is intended to manipulate objects.

Alternatively, obstacle sensors of a robot may be used and a condition relating to the environment of the robot may be imposed, e.g. in case of a 6-axes-robotic arm mounted on an AGV. However, in such a case, either a housing around the manipulator is necessary, or all points in vicinity of the robot need to be monitored from which the manipulator could be reached by a nearby human. Considering braking times of the manipulator, a still bigger zone around the robot may need to be monitored, if no housing is used. Hence, this solution either again comprises a housing configured for opening and closing when a portion of the manipulator is moved outside of the robot, or require a significant free space around the robot.

While the prior art approaches may be satisfactory in some regards, they have certain shortcomings and disadvantages.

It is an object of the invention to provide a mobile robot with an improved safety system and a corresponding method for operating a mobile robot.

It is an optional object of the invention to provide a mobile robot for operation in proximity to humans with improved maintainability and a method for operating the mobile robot.

It is another optional object of the invention to provide a mobile robot for manipulating objects with decreased risks of injury for nearby human operators and a method for operating the mobile robot.

It is still another optional object of the invention to provide a mobile robot with an increased fail safety and a method for operating the mobile robot.

It is still another optional object of the invention to provide a mobile robot with an improved safety system for a manipulator of the robot and a method for operating the mobile robot.

It is another optional object of the invention to provide a mobile robot for safe picking and/or putting with allowing for a more flexible pick and/or put stations and a method for controlling the mobile robot.

It is another optional object of the invention to provide a method for a reliable detection of safe pick/put-locations for a mobile robot and a mobile robot configured for executing the method.

In a first embodiment, a robot is disclosed. The robot comprises a housing, at least one manipulator, a control system configured for controlling the manipulator, a boundary sensor system and a safety volume enclosed at least by a surface set comprising at least one boundary surface.

The housing may comprise a set of housing parts of the robot, e.g. elements enclosing the mobile base and/or elements partially enclosing the manipulator. The housing may comprise at least one of gaps and holes.

The at least one of the gaps and holes may be too small for humans to reach through and/or get caught in. Said gaps and/or holes may not be considered openings in the present disclosure. Said holes and/or gaps may for example comprise a diameter/width of at most 14 mm.

The at least one manipulator may be a plurality of manipulators. When reference is made to "the manipulator" or "the at least one manipulator", the at least one or the plurality of manipulators may be meant, unless it is apparent that one or at least one of the at least one or the plurality of manipulators is meant.

The robot may comprise one or more further manipulators that may not be monitored, enclosed and/or operated according to the invention.

The at least one boundary surface may be a geometrical surface, i.e. the boundary surface may not need to be a physical surface, but rather a surface in the mathematical sense, e.g. a plane, a section of a spheroid, or another two-dimensional shape.

The safety volume may be enclosed by at least one portion of the housing and the surface set. In other words, at least one portion of the housing and the surface set may form a surface enclosing the safety volume.

The robot may comprise a mobile base. In other words, the robot may comprise a mobile base, to which other components may be mounted. Other components may also be integrated to the mobile base, e.g. a battery pack.

The surface set may comprise a plurality of boundary surfaces.

The safety volume may comprise the manipulator in a configuration of the manipulator, particularly in a retracted configuration of the manipulator. In other words, in at least one configuration of the manipulator, e.g. the retracted configuration, the safety volume may contain the manipulator.

In a use configuration of the robot, a vertical projection of the safety volume may be located within a vertical projection of the mobile base.

The housing of the robot may comprise at least one opening. The opening may be an opening through which the manipulator is configured for manipulating an environment of the robot. The at least one opening may particularly be plurality of openings. Each boundary surface may be associated with an opening.

In other words, for each opening, there may be at least one boundary surface. However, several boundary surfaces may be associated with an opening.

In one example, an opening which is a section of a substantially vertical plane may be associated with a plurality of boundary surfaces. For example, this opening may be divided in boundary surfaces along its height, i.e. the boundary surfaces comprise different vertical coordinates. This may be optionally advantageous if a part of the manipulator is configured for being moved outside of the robot at different heights, since the part is then moved through different boundary surfaces.

In another example, an opening may include an edge or a corner of a cuboid. In such a case, there may be a plurality of boundary surfaces associated with the opening, e.g. one with each planar section of the opening.

A plurality of intersecting boundary surfaces may form a continuous part of the surface of the safety volume. The continuous part of the surface of the safety volume may be intended to refer to a section of the surface that is not interrupted by portions of the housing.

An end portion of the manipulator may be configured to be moved through at least one of the boundary surfaces. The end portion may for example comprise at least one of a gripper, a tool, e.g. a welding tool, and a conveyor belt.

The boundary sensor system may be configured for monitoring at least one boundary surface of the surface set.

In other words, at least one of the at least one boundary surface of the surface set may be monitored by the boundary sensor system. However, there may be boundary surfaces that the boundary sensor system is not configured to monitor. In other words, the surface set may comprise at least one monitored boundary surface. However, the surface set may also optionally comprise at least one boundary surface that is not monitored or not monitored by the boundary sensor system.

The boundary sensor system may be configured for sensing a presence of an object intersecting with at least one boundary surface of the surface set. The object intersection with the at least one boundary surface of the surface set may for example be at least one of the manipulator, a part of the human body, e.g. a hand of a manipulator reaching into the robot, or an object such as a box or a bar that fell into the robot. This may be optionally advantageous, as it may enable automated recognition of objects reaching in or out of the robot. Said objects may be hurt/damaged upon movement of the robot or the manipulator.

The boundary sensor system may be configured for monitoring all substantially vertical boundary surfaces of the surface set. Substantially vertical boundary surfaces may be boundary surfaces that are oriented substantially vertical in a use configuration of the robot.

This may be optionally advantageous, as these surfaces may be particularly accessible to operators. Hence, monitoring these surfaces may be beneficial for an operation safety of the robot and for nearby humans. In contrast thereto, an upper side and/or a bottom side of the robot may not be accessible to humans, depending on dimensions of the robot.

The boundary sensor system may be configured for monitoring at least all boundary surfaces of the surface set inclined at most 10°, preferably at most 30° and still more preferably at most 45° with respect to a vertical axis.

A vertical projection of the at least one monitored boundary surface and a vertical projection of the housing may form a contour enclosing at least 180°, preferably at least 270° and still more preferably 360° of the manipulator in the retracted configuration.

The enclosing angles may for example be with respect to a base of at least one of the at least one manipulator or a centroid of a vertical projection of the manipulator in the retracted position.

The boundary sensor system may comprise at least one photoelectric sensor, wherein the at least one photoelectric sensor may preferably be plurality of photoelectric sensors.

The at least one photoelectric sensor may be configured for planar sensing, i.e. for sensing objects intersecting with a part of a plane. In other words, in some embodiments, the photoelectric sensor may not be or comprise a LIDAR-sensor.

In or in the vicinity of each of the at least one monitored boundary surface of the surface set, at least one of the at least one photoelectric sensor may be placed. Thus, optionally advantageously, the at least one photoelectric sensor may enable monitoring the corresponding boundary surface.

The at least one photoelectric sensor may comprise at least one of a light curtain and a time-of-flight safety laser scanner. A time-of-flight safety laser scanner may be a laser scanner configured for monitoring a section of a plane by means of emitting laser radiation, sensing at least one reflection and determining a distance of an object based on the reflection.

The at least one photoelectric sensor may be configured for fail-to-safety operation. In other words, the at least one photoelectric sensor may be configured for providing a safe output in case of a failure, e.g. "obstacle present" or "failure". This may be optionally advantageous, as in case of a failure, the robot may show a safe behavior. In contrast thereto, other sensors may show an unknown behaviour in case of the failure, e.g. indicating that no object was sensed.

The light curtain may be configured for detecting a human finger.

The at least one photoelectric sensor, may be configured for detecting objects comprising a size of 20 mm, preferably at least 14 mm. This may be optionally advantageous for avoiding injuries in case of operators putting only a single finger or only fingers into an opening of the housing, e.g. when trying to grip the housing.

Each of the at least one photoelectric sensor may be a redundant photoelectric sensor. In other words, each of the at least one photoelectric sensor may comprise a redundant design. The redundant design may e.g. also be achieved by a combination of two non-redundant photoelectric sensors and a corresponding control logic.

The control system may comprise a safety supervision system.

The safety supervision system may be a redundant control system. In other words, a data-processing system and/or a control system of the safety supervision system may be configured for redundant operation.

The safety supervision system may be configured for detecting a fault of at least one sensor connected to the safety supervision system. This may be optionally advantageous for increasing a fail safety of the robot.

The boundary sensor system may comprise a connection to the control system, particularly to the safety supervision system.

The boundary control system may comprise a redundant connection to the control system, particularly to the safety supervision system.

The control system may comprise a non-redundant control system.

The control system, particularly the non-redundant control system, may be configured for controlling an operation of the manipulator. The operation of the manipulator may e.g. be a movement of the manipulator and/or an operation of a tool or a gripper of the manipulator. In other words, the control system and/or the non-redundant control system may be configured for sending control signals to at least one actuator and/or drive of the manipulator.

The control system, particularly the non-redundant control system, may be configured for controlling the manipulator so as to pick and/or put items. This may be optionally advantageous, as picking and/or putting items may consume a relatively high amount of computation power, which requires less technical efforts if provided by a non-redundant control system.

The non-redundant control system may comprise a PC, such as an industrial PC.

In a first state, the control system may be configured for decelerating, particularly stopping the operation of the manipulator if the boundary sensor system senses an object intersecting with at least one of the at least one monitored boundary surface.

Particularly, in the first state, the safety supervision system may be configured for decelerating, particularly stopping the operation of the manipulator.

The person skilled in the art will understand that this is intended to refer to the safety supervision system controlling the robot so as to decelerate, particularly stop the operation of the manipulator. Decelerating the operation of the manipulator may for example comprise decelerating a velocity of the manipulator or an element thereof to a limit velocity.

The decelerating, particularly the stopping may e.g. be performed by sending control data, but e.g. also by actuating a brake or cutting a power line. However, the person skilled in the art will easily understand that this intended to also encompass a case in which the safety supervision system is configured for only performing these measures if the robot is not already decelerating, particularly stopping the operation of the manipulator. In other words, the safety supervision system may optionally advantageously be a fallback level for decelerating, particularly stopping the manipulator, particularly if the manipulator is not decelerated/stopped as expected by the safety supervision system, e.g. due to a fault of the control system.

The manipulator may comprise the brake. The decelerating, particularly the stopping may comprise activating the brake of the manipulator.

The decelerating, particularly stopping may comprise controlling a motor so as to decelerate, particularly stop at least a part of the operation of the manipulator. Controlling the motor may for example comprise sending a quick-stop signal to the motor. Controlling the motor may alternatively or additionally comprise controlling the motor according to a deceleration ramp.

The control system, particularly the non-redundant control system, may be configured for controlling said motor so as to decelerate, particularly stop at least the part of the operation of the manipulator.

The control system, particularly the safety supervision system, may be configured for monitoring a movement of the manipulator.

The decelerating, particularly the stopping may comprise deactivating a power supply of a motor of the manipulator.

The control system, particularly the safety supervision system, may be configured for at least one of deactivating a power supply of the motor of the manipulator and activating the brake of the manipulator, if the movement of the manipulator does not correspond to the controlling of the motor.

In other words, the control system, particularly the safety supervision system, may be configured for performing, if the movement of the manipulator does not correspond to the controlling of the motor, at least one of the deactivating of the power supply and the activating of the brake.

The corresponding of the movement of the manipulator to the controlling of the motor may e.g. not be the case if the movement diverges from a braking curve, such as a velocity ramp, and/or in case of a lag above a pre-defined threshold.

Decelerating the operation of the manipulator may comprise decelerating a movement of the manipulator below a safety threshold velocity.

The safety threshold velocity may for example be a velocity between 0,05 and 0,3 m/s. This may be optionally advantageous for limiting a kinetical energy of the manipulator and thus avoiding injuries or damages due to a collision of the manipulator with objects or a body part of a human.

In the first state, the safety supervision system may be configured for decelerating, particularly stopping the mobile base if the boundary sensor system senses an object intersecting with at least one of the at least one monitored boundary surface of the surface set. This may be optionally advantageous for avoiding injuries of a human operator reaching into the safety volume, and/or injuries/damages due to the manipulator being moved outside of the robot unexpectedly.

The mobile base may comprise a traction system. The traction system may comprise at least one traction unit. The traction system may be configured for propelling the robot. The at least one traction unit may for example be a motor comprising a connection to a wheel.Preferably, the at least one traction unit may be a plurality of traction units.

The safety supervision system may be configured for deactivating a power supply of at least a part of the traction system. For example, the safety supervision system may be configured for deactivating a power supply to at least one traction motor, and/or to a power-off brake, i.e. a brake that is open if it is connected to a power line and closed if it is disconnected from the power line.

The traction units may be omnidirectional drive modules. An omnidirectional drive module may comprise a driven wheel that is configured to be actively rotated around a substantially vertical axis. In other words, the wheel of an omnidirectional drive module may be configured for being rotated around the substantially vertical axis by means of a motor in a controlled manner.

The use of omnidirectional drive modules may optionally advantageously allow for more flexible propulsion and navigation of the robot.

The at least one traction unit may comprise a conventional wheel. The traction system may comprise conventional wheels.

The traction system may be configured for propelling the robot by separately driving at least two wheels. In other words, the robot may be a differential wheeled robot.

Alternatively, the traction system may comprise at least one steering wheel, i.e. at least one wheel that can be rotated along a vertical axis with respect to the robot.

In the first state, the safety supervision system may be configured for inhibiting a movement of the mobile base by the traction system, if the boundary sensor system senses an object intersecting with at least one of the at least one monitored boundary surface of the surface set and the mobile base is stationary.

In other words, in the first state, the safety supervision system may be configured for ensuring that the robot remains stationary in a case where an object intersects with at least one of the at least one monitored boundary surface. This may optionally advantageously avoid injuries of a human operator reaching into the robot due to the robot moving and/or damages/injuries due to the robot moving and the manipulator reaching out of the robot unexpectedly.

In the first state, the control system, particularly the safety supervision system, may be configured for limiting a velocity of the manipulator in proximity to at least one boundary surface of the surface set. Particularly, the control system, particularly the safety supervision system, may be configured in the first state for limiting the velocity of the manipulator in proximity to at least one boundary surface of the surface set to the safety threshold velocity, e.g. a velocity between 0,05 and 0,3 m/s.

This may optionally advantageously allow to stop the manipulator if an object intersects with a monitored boundary surface is sensed before the manipulator hits the objects. Hence, injuries and/or damages may optionally be avoided.

In the first state, the control system, particularly the safety supervision system, may be configured for limiting a velocity of the manipulator in proximity to at least one boundary surface of the surface set so as to enable the manipulator to stop in case of a human reaching through the at least one boundary surface without injuring the human. The person skilled in the art will easily understand that the term "without injuring" is intended to refer to injuries due to a kinetic energy of the manipulator, but not necessarily to injuries due to other properties of the manipulator, e.g. its temperature, which may not be influenced by a reduction of the velocity.

The control system may be configured for detecting a second state.

The second state may be detected implicitly. In other words, the control system, particularly the safety supervision system, may be configured for performing at least one step and/or action corresponding to the second state if a condition for detecting the second state is satisfied. In some embodiments, the control system, particularly the safety supervision system, may not explicitly verify a presence of the second state, e.g. in a case where a control logic implements the at least one step and/or action based on data based on which the second state is detected.

The second state and the first state may be mutually exclusive. In other words, in some embodiments, only one of the first and the second state may be detected at a same point in time.

However, in some embodiments, the first and the second state do not need to be collectively exhaustive. That is, in some embodiments, still another state may be detected, as long as the first and the second state are never detected at a same point in time.

The safety supervision system may be configured for detecting the second state.

This may be optionally advantageous, since a detection of the second state may result in behaviour of the robot which might affect an interaction of the robot and its environment. Hence, detecting the second state by means of the safety supervision system may increase a fail safety of the robot.

In the second state, the control system, particularly the safety supervision system, may be configured for not decelerating, particularly for not stopping the operation of the manipulator in response to the boundary sensor system sensing an object intersecting with at least one boundary surface of the surface set. In other words, in the second state, a movement of the manipulator through the boundary surface may not be inhibited due to a violation of a respective boundary surface.

This may be optionally advantageous, since it allows a more controlled interaction of the manipulator with an environment of the robot and hence increases the fail safety of the robot.

The control system, particularly the safety supervision system, may be configured for detecting the second state for at least one of the boundary surfaces. In other words, at least two boundary surfaces may be associated with different states.

This may optionally advantageously allow for more differentiated control of movements of the manipulator and hence further increase the fail safety of the robot.

In an example, the robot may comprise at least two opposing openings. With each of the openings, at least one respective boundary surface may be associated. In front of a shelf, it may hence be safe to move the manipulator into the shelf (i.e. out of the robot) on a side facing the shelf, but not on an opposite site. In such a case, detecting the second state for a boundary surface associated with the opening facing the shelf and detecting the first state for a boundary surface associated with the opening on the opposite site of the robot may avoid the manipulator to injure nearby humans or collide with another object, such as a passing robot.

In another or the same example, a plurality of boundary surfaces may be associated with a same, i.e. with one, opening. In such a case, a boundary surface through which the part of the manipulator is moved may be in the second state, and at least one other boundary surface associated with the same opening may be in the first state. The boundary surfaces may correspond to sections of the opening. For example, the boundary surfaces may correspond to different height sections of the opening.

This may be optionally advantageous, as an operator or an object reaching into the opening may be detected and an operation of the manipulator may be decelerated, particularly stopped, even though the part of the manipulator needs to be moved through the opening.

The control system, particularly the safety supervision system, may be configured for detecting the second state independently for each of at least two of the boundary surfaces.

"Independently" is intended to mean that however, for two independent states, also a result of a same step may be used for determining these states, as long as the determining can lead to two independent results.

For each of the boundary surfaces, the first state and the second state may be mutually exclusive. In other words, for each of the boundary surfaces, only one of the first and the second state may be detected. However, as set out above, for one boundary surface, the first state may be detected, and for another, the second state may be detected.

The control system, particularly the safety supervision system, may be configured for not decelerating, particularly for not stopping the operation of the manipulator in response to the boundary sensor system sensing an object intersecting with a boundary surface in the second state.

The term "a boundary surface in the second state" is intended to refer to a boundary surface for which the second state was detected.

This may be optionally advantageous, as a more differentiated control of boundary surfaces through which the manipulator may be moved is possible. Hence, a safety for humans in proximity of the robot may be improved.

The robot may comprise a manipulator sensing system. The manipulator sensing system may be configured for sensing an orientation and/or a pose of the at least one manipulator.

The safety supervision system may be configured for determining the second state of the at least one of the boundary surfaces based on an orientation of the at least one manipulator. For example, the second state may be detected for a boundary surface to which the manipulator is oriented, optionally advantageously allowing to still trigger decelerating, particularly stopping the operation of the manipulator if a nearby human reaches through another boundary surface.

The control system, particularly the safety supervision system, may be configured for only not decelerating, particularly not stopping the operation of the manipulator in response to the boundary sensor system sensing an object intersecting with a boundary surface in the second state if at least one of the at least one manipulator intersects with the boundary surface. This may optionally advantageously increase a safety for nearby humans.

The safety supervision system may be configured for determining whether the at least one of the at least one manipulator intersects with the boundary surface.

The control system, particularly the safety supervision system, may be configured for detecting the second state if a docking condition is satisfied in proximity of an interaction location.

The interaction location may be a location configured for safe handover of items. For example, handover locations may be a shelf, a handover table, a tugger train and/or a machine intake for items.

The robot may be configured for sensing a marker element associated with an interaction location. The docking condition may relate at least to a presence of said marker element.

The docking condition may be an explicit condition. However, the docking condition may also be implicit. In other words, the control system may be configured for detecting the second state based on the docking condition, but the control system may also be configured for only implicitly verifying the docking condition.

The marker element may comprise portion comprising optically encoded data, such as a barcode or a QR-code. The robot may be configured for sensing the optically encoded data. The docking condition may relate at least to the optically encoded data.

Sensing optically encoded data may be optionally advantageous, as safe detection of the marker element may be facilitated. Hence, a quantity of false detections of the second state may be reduced. Thus, optionally, a fail safety of the robot may be increased.

The robot may comprise a camera configured for sensing the optically encoded data. The camera may be configured for sensing visible light. However, the camera may also be configured for sensing infrared light.

The marker element may comprise a reflecting portion. The robot may comprise a reflection sensing unit configured for sensing a presence of the reflecting portion.

The reflecting portion may be highly reflecting.

The docking condition may relate at least to a presence of the reflecting portion.

The robot, particularly the safety supervision system, may further be configured for determining an orientation of the reflecting portion with respect to the robot. This may optionally advantageously allow for limiting positions of the robot with respect to the interaction location where the second state is detected. Thus, optionally, a fail safety of the robot may be increased.

The reflection sensing unit may be mounted to the manipulator.

The reflection sensing unit may comprise a redundant sensor. This may optionally advantageously increase a fail safety of the robot.

The reflection sensing unit may be configured for emitting polarised light.

The reflection sensing unit may be configured for sensing polarised light.

The reflection sensing unit may be configured for sensing polarised light corresponding to a reflection of the emitted polarised light.

Using polarised light may be optionally advantageous, as false detections of the marker element due to other highly reflective objects, such as very white, diffusely reflecting elements or light sources may be avoided. Hence, optionally advantageously, a fail safety of the robot may be increased.

The reflecting portion may be configured for retroreflection. For example, the reflecting portion may comprise at least one of a corner reflector, a cat's eye-reflector, a phase-conjugate mirror, retroreflective sheeting and retroreflective tape. Particularly, the retroreflective sheeting and/or retroreflective tape may comprise at least one of retroreflective glass beads, microprisms, or encapsulated lenses.

The reflecting portion may comprise a coefficient of luminous intensity of at least 60 cd/(lx*m²), preferably at least 180 cd/(lx*m²).

As the person skilled in the art knows, the coefficient of luminous intensity may be determined according to the "Agreement Concerning the Adoption of Harmonized Technical United Nations Regulations for Wheeled Vehicles, Equipment and Parts which can be Fitted and/or be Used on Wheeled Vehicles and the Conditions for Reciprocal Recognition of Approvals Granted on the Basis of these United Nations Regulations" (in the version of January 13, 2020, available at https://unece.org/sites/default/files/2021-05/R150e.pdf).

The robot may be configured for sensing a distance to a portion of the interaction location, particularly to the marker element.

The docking condition relates at least to the distance to the portion of the interaction location, particularly to the distance to the marker element. For example, the docking condition may comprise a portion or a sub-condition requiring a maximum distance above which the second state is not detected.

This may be optionally advantageous for reducing false localisations of the robot with respect to the handover location, e.g. in case of imprecise localisation and/or a mobile handover location such as a tugger train. Further, optionally advantageously, a gap between the handover location and the robot in which a human could or an object, such as another robot, may reach, may be avoided.

The robot may comprise a redundant distance sensor configured for sensing the distance.

The marker element may comprise a wireless data element. The wireless data elementmay be configured for wireless identification, i.e. for wireless data transmission. The wireless data element may for example be an RFID-tag, an NFC-tag or a wireless network-access point. The wireless network-access point may be according to a standard of the IEEE 802.11 standard family. The robot may be configured for receiving wireless data from the wireless data element. The docking condition may relate at least to the wireless data .

This may be optionally advantageous, as wireless communication may allow for fail safe data communication as well as for communication of a larger amount of data.

The wireless data elementmay be a passive element. In other words, the wireless data element may be an unpowered element, i.e. an element that does not comprise a battery or a connection to a power source or a power grid. The robot may comprise a wireless reader configured for reading the wireless data from the passive data element. In other words, the wireless reader may be configured for activating the wireless data element and receiving data from the wireless data element.

This may be optionally advantageous, as a functionality of the passive element may not depend on a power connection of the element.

The passive element may for example be an RFID-tag or an NFC-tag. The wireless reader may for example be an RFID-reader or an NFC-reader.

The docking condition may comprise a data integrity condition relating to at least one of the optically encoded data and the wireless data. This may optionally advantageously reduce a quantity of false detections of the marker element.

The robot may comprise an obstacle sensor configured for sensing obstacles, such as a safety laser scanner. The obstacle sensor may particularly be a substantially horizontally oriented safety laser scanner. In other words, the obstacle sensor may be configured for sensing objects intersecting with a portion of a substantially horizontal plane.

The robot may be configured for sensing a contour of a portion of the interaction location. The docking condition may relate at least to said contour.

The contour may be a contour at a substantially constant height, e.g. along an intersection with a substantially horizontal plane.

The portion of the interaction location may e.g. be a portion facing the robot in an interaction position of the robot.

The obstacle sensor may be configured for sensing the contour of the portion of the interaction location.

The obstacle sensor may be configured for sensing a presence of humans. The control system, particularly the safety supervision system, may be configured for detecting the first state if the obstacle sensor senses a human in an area associated with the interaction location.

This may be optionally advantageous so as to avoid a danger for a nearby human due to an operation of the manipulator outside of the robot.

The area associated with the interaction location may be a pre-determined area next to or around the interaction location, e.g. an area from which a portion of the interaction location where an item is stored can be reached by a human.

The first state may be detected implicitly. In other words, the control system, particularly the safety supervision system, may be configured for performing at least one step and/or action corresponding to the first state if a condition for detecting the first state is satisfied. In some embodiments, the control system, particularly the safety supervision system, may not explicitly verify a presence of the first state, e.g. in a case where a control logic implements the at least one step and/or action based on data based on which the first state is detected.

The non-redundant control system may be configured for sending a docking signal to the safety supervision system. The docking condition may relate at least to the docking signal.

The docking condition may relate at least to a determined position of the robot. The control system is configured for determining the position of the robot. The control system may e.g. be configured for localising the robot based on data from the obstacle sensor and/or a laser scanner system.

The non-redundant control system may be configured for determining the position of the robot and for sending the determined position of the robot to the safety supervision system. This may be optionally advantageous, as determining said position of the robot may require a higher computing power, and may hence be easier to implement on a non-redundant data processing system.

Further, uncertainties of the determined position may be independent of faults inherent to the data processing system, hence, a fail safety of a position determined by a non-redundant control system may not be significantly lower than a fail safety of a position determined by the safety supervision system.

The control system, particularly the non-redundant control system, may be configured for matching the determined position and a part of the optically encoded data.

Matching may relate to performing an operation for determining whether two data elements comprise corresponding portions, e.g. comparing portions of the data elements, generating a hash of at least one of the data elements and comparing said hash to a portion of the other data element and/or another known technique for verifying whether two data elements comprise corresponding portions.

The control system, particularly the non-redundant control system, may be configured for matching the determined position and a part of the wireless data.

The control system, particularly the non-redundant control system, may be configured for matching a part of the part of the wireless data to map data corresponding to the determined position.

The control-system, particularly the non-redundant control system, may be configured for matching the presence of the reflecting portion to map data corresponding to the determined position.

The docking condition may relate at least to a success of the matching.

The control system, particularly the non-redundant control system, may be configured for matching a part of the wireless data and a part of the optically encoded data, and wherein the docking condition relates at least to a success of the matching.

The at least one manipulator may be configured for handling items, particularly boxes and/or containers. The boxes may for example small load carriers.

The robot may comprise a storage unit configured for storing the items, particularly the boxes and/or containers.

The at least one manipulator may be configured for storing the items in the storage unit and/or retrieving the items from the storage unit.

The at least one manipulator may comprise a conveyor belt.

The robot may be a freely moving robot. In other words, in some embodiments, the robot may not be an industrial robot comprising a stationary base. In other words, the robot may not be a stationary robot, such as an industrial 6-axes-robot.

At least one of the manipulator may be configured for moving along an axis, such as a linear axis, particularly a vertically oriented linear axis.

In the first state, the control system, particularly the safety supervision system, may be configured for limiting the velocity of the manipulator in proximity to at least one end of the axis, such as an upper and/or a lower end of the axis.

This may optionally advantageously allow for decelerating the manipulator faster in proximity of the upper/lower end of the axis and hence reduce a crushing risk for a human reaching between the manipulator and the upper/lower end of the axis.

The control system, particularly the safety supervision system, may be configured for limiting the velocity of the manipulator in proximity to at least one end of the axis to the safety threshold velocity.

In a second embodiment, a use of the robot for providing items to at least one production station in a production facility is disclosed.

Further, a use of the robot for transporting items in a warehouse is disclosed.

In a third embodiment, a system is disclosed. Advantages, details and embodiments disclosed with respect to the robot may apply respectively.

The system comprises a plurality of interaction locations and at least one robot as disclosed above. The at least one robot is configured for picking and/or putting items at the handover locations.

The handover locations may particularly be handover stations.

At least one of the interaction locations, particularly the handover stations, may comprise a marker element. The robot may be configured for sensing the marker element associated with the at least one of the interaction locations.

The marker element may comprise a portion comprising optically encoded data, such as a barcode or a QR-code. The at least one robot robot may be configured for sensing the optically encoded data. The docking condition may relate at least to the optically encoded data.

The marker element may comprise a reflecting portion. The robot may comprise a reflection sensing unit configured for sensing a presence of the reflecting portion.

The reflecting portion may be configured for specular reflection. In other words, a greater portion of light reflected by the portion may be reflected by specular reflection than by diffuse reflection.

The reflecting portion may be configured for retroreflection.

The reflecting portion may comprise a coefficient of luminous intensity of at least 60 cd/(lx*m²), preferably at least 180 cd/(lx*m²).

The marker element may comprise a wireless data element configured for wireless identification, such as an RFID-tag, an NFC-tag or a wireless network-access point. The at least one robot may be configured for receiving the wireless data from the wireless data element.

In a fourth embodiment, a method for operating the robot is disclosed. Advantages, details and embodiments disclosed with respect to the robot may apply respectively.

The method comprises using the robot comprising the housing, the at least one manipulator, the control system, the boundary sensor system, and the safety volume enclosed at least by the surface set comprising the at least one boundary surface.

The safety volume may be enclosed by the at least one portion of the housing and the surface set.

The robot may comprise the mobile base.

The surface set may comprise the plurality of boundary surfaces.

The safety volume may comprise the manipulator in a configuration of the manipulator, particularly in the retracted configuration of the manipulator.

In the use configuration of the robot, the vertical projection of the safety volume may be located within the vertical projection of the mobile base.

The housing of the robot may comprise at least one opening. The at least one opening may particularly be the plurality of openings. Each boundary surface may be associated with an opening, i.e. with an opening of the at least opening.

A plurality of intersecting boundary surfaces may form a continuous part of the surface of the safety volume.

The method may comprise the robot moving an end portion of the manipulator through at least one of the boundary surfaces.

The method may comprise the boundary sensor system monitoring at least one boundary surface of the surface set.

The method may comprise the boundary sensor system sensing the presence of an object intersecting with at least one boundary surface of the surface set.

The method may comprise the boundary sensor system monitoring all substantially vertical boundary surfaces of the surface set.

The method may comprise the boundary sensor system monitoring at least all boundary surfaces inclined at most 10°, preferably at most 30° and still more preferably at most 45° with respect to the vertical axis.

The vertical projection of the at least one monitored boundary surface and the vertical projection of the housing may form the contour enclosing at least 180°, preferably at least 270° and still more preferably 360° of the manipulator in the retracted configuration.

The boundary sensor system may comprise the at least one photoelectric sensor. The at least one photoelectric sensor may preferably be the plurality of photoelectric sensors.

The method may comprise the at least one photoelectric sensor sensing objects intersecting with a part of the plane.

In or in the vicinity of each of the at least one monitored boundary surface of the surface set, at least one of the at least one photoelectric sensor may be placed. In other words, the method may comprise using a robot comprising at least one of the at least one photoelectric sensor in or in the vicinity of each of the at least one monitored boundary surface of the surface set.

The at least one photoelectric sensor may comprise at least one of a light curtain and a time-of-flight safety laser scanner.

The at least one photoelectric sensor may operate in fail-to-safety operation.

The method may comprise the at least one photoelectric sensor detecting the objects comprising a diameter of at least 14 mm.

Each of the at least one photoelectric sensor may be a redundant photoelectric sensor.

The control system may comprise the safety supervision system.

The safety supervision system may be the redundant control system. As set out above, the data-processing system and/or the control system of the safety supervision system may be configured for redundant operation.

The method may comprise the safety supervision system detecting the presence of a fault of at least one sensor connected to the safety supervision system.

The boundary sensor system may comprise the connection to the control system, particularly to the safety supervision system.

The boundary control system may comprise the redundant connection to the control system, particularly to the safety supervision system.

The control system may comprise the non-redundant control system.

The method may comprise the control system, particularly the non-redundant control system, controlling the operation of the manipulator.

The method may comprise the control system, particularly the non-redundant control system, controlling the manipulator so as to pick and/or put items.

The non-redundant control system may comprise the PC, such as the industrial PC.

The method may comprise the control system decelerating, particularly stopping in a first state the operation of the manipulator if the boundary sensor system senses an object intersecting with at least one of the at least one monitored boundary surface.

The method may comprise the safety supervision system decelerating, particularly stopping in the first state the operation of the manipulator. In other words, the method may comprise the safety supervision system carrying out the decelerating, particularly the stopping discussed in the preceding paragraph.

The manipulator may comprise a brake. The decelerating, particularly the stopping, may comprise activating the brake of the manipulator.

The decelerating, particularly the stopping may comprise controlling the motor so as to decelerate, particularly to stop at least the part of the operation of the manipulator.

The method may comprise the control system, particularly the non-redundant control system, controlling said motor so as to decelerate, particularly to stop at least the part of the operation of the manipulator.

The method may comprise the control system, particularly the safety supervision system, monitoring the movement of the manipulator.

The decelerating, particularly the stopping may comprise deactivating the power supply of the motor of the manipulator.

The method may comprise the control system, particularly the safety supervision system, performing at least one of deactivating the power supply of the motor of the manipulator and activating the brake of the manipulator, if the movement of the manipulator does not correspond to the controlling of the motor.

Decelerating the operation of the manipulator may comprise decelerating the movement of the manipulator below the safety threshold velocity.

The method may comprise in the first state, the safety supervision system decelerating, particularly stopping the mobile base if the boundary sensor system senses an object intersecting with at least one of the at least one monitored boundary surface of the surface set.

The mobile base may comprise the traction system comprising the at least one traction unit. The at least one traction unit may preferably be the plurality of traction units. The method may comprise the traction system propelling the robot.

The method may comprise the safety supervision system deactivating the power supply to at least the part of the traction system.

The traction units may be omnidirectional drive modules. In other words, the method may comprise using the robot comprising the omnidirectional drive modules. Particularly, the method may comprise for each omnidirectional drive module rotating the respective wheel around the substantially vertical axis, preferably by means of a motor.

The traction system may also comprise conventional wheels.

The robot may be differential wheeled robot. In other words, the method may comprise steering the robot by controlling a relative rate of rotation of the wheels of the robot, particularly in a case where the wheels are mounted on opposing sides of the robot.

The method may comprise in the first state, the safety supervision system inhibiting the movement of the mobile base by the traction system, in case that the boundary sensor system senses an object intersecting with at least one of the at least one monitored boundary surface of the surface set and the mobile base is stationary.

The method may comprise in the first state the control system, particularly the safety supervision system, limiting the velocity of the manipulator in proximity to at least one boundary surface of the surface set. Particularly, the method may comprise the control system, particularly the safety supervision system, limiting the velocity of the manipulator in proximity to the at least one boundary surface of the surface set to the safety threshold velocity, e.g. the velocity between 0,05 m/s and 0,3 m/s.

The method may comprise in the first state the control system, particularly the safety supervision system, limiting the velocity of the manipulator in proximity to at least one boundary surface of the surface set so as to enable the manipulator to stop in case of the human reaching through the at least one boundary surface without injuring the human.

The method may comprise the control system detecting the second state.

The second state and the first state may be mutually exclusive.

The safety supervision system may detect the second state.

In the second state, the method may comprise the control system, particularly the safety supervision system, not decelerating, particularly not stopping the operation of the manipulator in response to the boundary sensor system sensing an object intersecting with at least one boundary surface of the surface set.

The method may comprise the control system, particularly the safety supervision system, detecting the second state for at least one of the boundary surfaces.

The method may comprise the control system, particularly the safety supervision system, detecting the second state independently for each of at least two of the boundary surfaces.

For each of the boundary surfaces, the first state and the second state may be mutually exclusive.

The method may comprise the control system, particularly the safety supervision system, not decelerating, particularly not stopping the operation of the manipulator in response to the boundary sensor system sensing an object intersecting with a boundary surface in the second state.

The robot may comprise the manipulator sensing system. The method may comprise the manipulator sensing system sensing the orientation and/or the pose of the at least one manipulator.

The method may comprise the safety supervision system determining the second state of at least one of the boundary surfaces based on an orientation of a portion, such as the end portion, of the at least one manipulator.

The method may comprise the control system, particularly the safety supervision system, only not decelerating, particularly not stopping the operation of the manipulator in response to the boundary sensor system sensing an object intersecting with a boundary surface in the second state, if at least one of the at least one manipulator intersects with the boundary surface.

In other words, the method may comprise the control system, particularly the safety supervision system, verifying whether the manipulator intersects with the boundary surface if the boundary sensor system senses an object intersecting with a boundary surface in the second state. The method may further comprise decelerating, particularly stopping the operation of the manipulator in this case, if the manipulator does not intersect with the boundary surface. In still other words, the method may comprise decelerating/stopping the manipulator, if another object than the manipulator is detected intersecting with the at least one or the plurality of the boundary surfaces.

The method may comprise the safety supervision system determining whether the at least one of the at least one manipulator intersects with the boundary surface.

The method may comprise the control system, particularly the safety supervision system, detecting the second state if the docking condition is satisfied in proximity of the interaction location.

The method may comprise the robot sensing the marker element associated with the interaction location. The docking condition may relate at least to the presence of said marker element.

The marker element may comprise the portion comprising the optically encoded data, such as the barcode or the QR-code. The method may comprise the robot sensing the optically encoded data. The docking condition may relate at least to the optically encoded data.

The robot may comprise the camera. The method may comprise the camera sensing the optically encoded data.

The marker element may comprise the reflecting portion. The robot may comprise the reflection sensing unit. The method may comprise the reflection sensing unit sensing the presence of the reflecting portion.

The docking condition may relate at least to the presence of the reflecting portion.

The method may comprise the robot, particularly the safety supervision system, determining the orientation of the reflecting portion with respect to the robot.

The reflection sensing unit may be mounted to the manipulator.

The reflection sensing unit may comprise the redundant sensor.

The method may comprise the reflection sensing unit emitting polarised light.

The method may comprise the reflection sensing unit sensing polarised light.

The method may comprise the reflection sensing unit sensing polarised light corresponding to the reflection or the retroreflection of the emitted polarised light.

The method may comprise the reflecting portion retroreflecting light.

The method may comprise the robot sensing the distance to the portion of the interaction location, particularly to the marker element.

The docking condition may relate at least to the distance to the portion of the interaction location, particularly to the distance to the marker element.

The robot may comprise the redundant distance sensor. The redundant distance sensor may sense the distance.

The marker element may comprise the wireless data element configured for wireless identification, such as the RFID-tag, the NFC-tag or the wireless network-access point. The method may comprise the robot receiving wireless data from the wireless data element. The docking condition may relate at least to the wireless data.

The wireless data element may be the passive element, such as the RFID-tag or the NFC-tag. The robot may comprise the wireless reader, such as the RFID-reader or the NFC-reader. The method may comprise the wireless reader reading data from the passive element.The docking condition may comprise the data integrity condition relating to at least one of the wireless data and optically encoded data.

The robot may comprise the obstacle sensor, such as the safety laser scanner, particularly the substantially horizontally oriented safety laser scanner. The method may comprise the obstacle sensor sensing obstacles.

The method may comprise the robot sensing the contour of the portion of the interaction location. The docking condition may relate at least to said contour.

The obstacle sensor may sense the contour of the portion of the interaction location.

The method may comprise the obstacle sensor sensing a presence of humans. The method may further comprise the control system, particularly the safety supervision system, detecting the first state if the obstacle sensor senses a human in the area associated with the interaction location.

The method may comprise the non-redundant control system sending the docking signal to the safety supervision system. The docking condition may relate at least to the docking signal.

The docking condition may relate at least to the determined position of the robot. The method may comprise the control system determining the position of the robot.

The method may comprise the non-redundant control system determining the position of the robot. The method may further comprise sending the determined position of the robot to the safety supervision system.

The method may comprise the control system, particularly the non-redundant control system, matching the determined position and the part of the optically encoded data.

The method may comprise the control system, particularly the non-redundant control system, matching the determined position and the part of the wireless data.

The method may comprise the control system, particularly the non-redundant control system, matching a part of the part of the wireless data to map data corresponding to the determined position.

The method may comprise the control-system, particularly the non-redundant control system, matching the presence of the reflecting portion to map data corresponding to the determined position.

The docking condition may relate at least to the success of the matching.

The method may comprise the control system, particularly the non-redundant control system, matching the part of the wireless data and the part of the optically encoded data. The docking condition may relate at least to the success of the matching.

The method may comprise the at least one manipulator handling the items, particularly the boxes and/or the containers.

The robot may comprise the storage unit. The method may comprise storing the items, particularly the boxes and/or containers, in the storage unit.

The method may comprise the at least one manipulator storing the items in the storage unit and/or retrieving the items from the storage unit.

The at least one manipulator may comprise the conveyor belt.

The robot may be the freely moving robot.

The method may comprise moving at least one of the at least one manipulator along the axis, such as the linear axis, particularly the vertically oriented linear axis.

The method may comprise the control system, particularly the safety supervision system, limiting the velocity of the manipulator in proximity to the at least one end of the axis, such as the upper and/or the lower end of the axis, in the first state.

The method may comprise the control system, particularly the safety supervision system, limiting the velocity of the manipulator in proximity to the at least one end of the axis to the safety threshold velocity.

The reflecting portion of the marker element may comprise the coefficient of luminous intensity of at least 60 cd/(lx*m²), preferably at least 180 cd/(lx*m²).

The method may comprise using a robot as disclosed above.

The disclosed robot may be configured for performing the method.

In a fifth embodiment, a computer program product is disclosed. The computer program product comprises instructions, which, when the program is executed by a control system of the robot, cause the robot to execute the steps of the method.

The following embodiments also form part of the invention.
Below, robot embodiments will be discussed. The robot embodiments are abbreviated by the letter "R" followed by a number. Whenever reference is herein made to the "robot embodiments", these embodiments are meant.
R1. A robot, comprising
   - a housing,
   - at least one manipulator,
   - a control system configured for controlling the manipulator,
   - a safety volume enclosed at least by a surface set comprising at least one boundary surface, and
   - a boundary sensor system.
R2. The robot according to the preceding embodiment, wherein the safety volume is enclosed by at least one portion of the housing and the surface set.
R3. The robot according to any of the preceding embodiments, wherein the robot comprises a mobile base.
R4. The robot according to any of the preceding embodiments, wherein the surface set comprises a plurality of boundary surfaces.
R5. The robot according to any of the preceding embodiments, wherein the safety volume comprises the manipulator in a configuration of the manipulator, particularly in a retracted configuration of the manipulator.
R6. The robot according to any of the preceding embodiments and with the features of embodiment R3, wherein in a use configuration of the robot, a vertical projection of the safety volume is located within a vertical projection of the mobile base.
R7. The robot according to any of the preceding embodiments, wherein the housing of the robot comprises at least one opening, wherein the at least one opening particularly is plurality of openings, and wherein each boundary surface is associated with an opening.
R8. The robot according to any of the preceding embodiments, wherein a plurality of intersecting boundary surfaces form a continuous part of a surface of the safety volume.
R9. The robot according to any of the preceding embodiments, wherein an end portion of the manipulator is configured to be moved through at least one of the boundary surfaces.
R10. The robot according to any of the preceding embodiments, wherein the boundary sensor system is configured for monitoring at least one boundary surface of the surface set.
R11. The robot according to the preceding embodiment, wherein the boundary sensor system is configured for sensing a presence of an object intersecting with at least one boundary surface of the surface set.
R12. The robot according to any of the two preceding embodiments and with the features of embodiment R7, wherein the boundary sensor system is configured for monitoring all substantially vertical boundary surfaces of the surface set.
R13. The robot according to the preceding embodiment, wherein the boundary sensor system is configured for monitoring at least all boundary surfaces inclined at most 10°, preferably at most 30° and still more preferably at most 45° with respect to a vertical axis.
R14. The robot according to any of the preceding embodiments with the features of embodiment R10, wherein a vertical projection of the at least one monitored boundary surface and a vertical projection of the housing form a contour enclosing at least 180°, preferably at least 270° and still more preferably 360° of the manipulator in the retracted configuration.
R15. The robot according to any of the preceding embodiments, wherein the boundary sensor system comprises at least one photoelectric sensor, wherein the at least one photoelectric sensor is preferably a plurality of photoelectric sensors.
R16. The robot according to the preceding embodiment, wherein the at least one photoelectric sensor is configured for planar sensing, i.e. for sensing objects intersecting with a part of a plane.
R17. The robot according to any of the 2 preceding embodiments with the features of embodiments R10, wherein in or in the vicinity of each of the at least one monitored boundary surface of the surface set, at least one of the at least one photoelectic sensor is placed.
R18. The robot according to any of the 3 preceding embodiments, wherein the at least one photoelectric sensor comprise at least one of a light curtain and a time-of-flight safety laser scanner.
R19. The robot according to any of the preceding embodiments with the features of embodiment R15, wherein the at least one photoelectric sensor is configured for fail-to-safety operation.
R20. The robot according to any of the preceding embodiments with the features of embodiment R15, wherein the at least one photoelectric sensor is configured for detecting objects comprising a diameter of at least 14 mm.
R21. The robot according to any of the preceding embodiments with the features of embodiment R15, wherein each of the at least one photoelectric sensor is a redundant photoelectric sensor.
R22. The robot according to any of the preceding embodiments, wherein the control system comprises a safety supervision system.
R23. The robot according to the preceding embodiment, wherein the safety supervision system is a redundant control system.
R24. The robot according to any of the 2 preceding embodiments, wherein the safety supervision system is configured for detecting a fault of at least one sensor connected to the safety supervision system.
R25. The robot according to any of the preceding embodiments, particularly with the features of embodiment R22, wherein the boundary sensor system comprises a connection to the control system, particularly to the safety supervision system.
R26. The robot according to the preceding embodiment, wherein the boundary control system comprises a redundant connection to the control system, particularly to the safety supervision system.
R27. The robot according to any of the preceding embodiments, wherein the control system comprises a non-redundant control system.
R28. The robot according to any of the preceding embodiments, particularly according to the preceding embodiment, wherein the control system, particularly the non-redundant control system, is configured for controlling an operation of the manipulator.
R29. The robot according to the preceding embodiment, wherein the control system, particularly the non-redundant control system, is configured for controlling the manipulator so as to pick and/or put items.
R30. The robot according to any of the preceding 3 embodiments, wherein the non-redundant control system comprises a PC, such as an industrial PC.
R31. The robot according to any of the preceding embodiments and with the features of embodiment R10, wherein in a first state, the control system is configured for decelerating, particularly stopping the operation of the manipulator if the boundary sensor system senses an object intersecting with at least one of the at least one monitored boundary surface.
R32. The robot according to the preceding embodiment and with the features of embodiment R22, wherein in the first state, the safety supervision system, is configured for decelerating, particularly stopping the operation of the manipulator.
R33. The robot according to any of the 2 preceding embodiments, wherein the manipulator comprises a brake, and wherein the decelerating, particularly stopping comprises activating the brake of the manipulator.
R34. The robot according to any of the 3 preceding embodiments, wherein the decelerating, particularly stopping comprises controlling a motor so as to decelerate, particularly stop at least a part of the operation of the manipulator.
R35. The robot according to the preceding embodiment, wherein the control system, particularly the non-redundant control system, is configured for controlling said motor so as to stop or decelerate at least the part of the operation of the manipulator.
R36. The robot according to any of the 2 preceding embodiments, wherein the control system, particularly the safety supervision system, is configured for monitoring a movement of the manipulator.
R37. The robot according to any of the 6 preceding embodiments, wherein the decelerating, particularly stopping comprises deactivating a power supply of a motor of the manipulator.
R38. The robot according to the penultimate embodiment with the features of embodiments R37 and R23, wherein the control system, particularly the safety supervision system, is configured for at least one of deactivating a power supply of the motor of the manipulator and activating the brake of the manipulator, if the movement of the manipulator does not correspond to the controlling of the motor.
   In other words, the control system, particularly the safety supervision system, may be configured for performing, if the movement of the manipulator does not correspond to the controlling of the motor, at least one of the deactivating of the power supply and the activating of the brake.
R39. The robot according to any of the 8 preceding embodiments, wherein decelerating the operation of the manipulator comprises decelerating a movement of the manipulator below a safety threshold velocity.
R40. The robot according to any of the preceding embodiments and with the features of embodiments R3 and R31, wherein in the first state, the safety supervision system is configured for decelerating, particularly stopping the mobile base if the boundary sensor system senses an object intersecting with at least one of the at least one monitored boundary surface of the surface set.
R41. The robot according to any of the preceding embodiments and with the features of embodiment R3, wherein the mobile base comprises a traction system comprising at least one traction unit, wherein the at least one traction unit preferably is a plurality of traction units, wherein the traction system is configured for propelling the robot.
R42. The robot according to the preceding embodiment and with the features of embodiment R22, wherein the safety supervision system is configured for deactivating a power supply of at least a part of the traction system.
R43. The robot according to any of the 2 preceding embodiments, wherein the traction units are omnidirectional drive modules.
R44. The robot according to any of the 3 preceding embodiments but the last, wherein the traction system comprises conventional wheels.
R45. The robot according to the preceding embodiment, wherein the robot is a differential wheeled robot.
R46. The robot according to any of the preceding embodiments and with the features of embodiments R31 and R41, wherein in the first state, the safety supervision system is configured for inhibiting a movement of the mobile base by the traction system,
   if the boundary sensor system senses an object intersecting with at least one of the at least one monitored boundary surface of the surface set and the mobile base is stationary.
R47. The robot according to any of the preceding embodiments with the features of embodiment R31, particularly with the features of embodiment R19, wherein in the first state, the control system, particularly the safety supervision system, is configured for limiting a velocity of the manipulator in proximity to at least one boundary surface of the surface set, particularly to the safety threshold velocity.
R48. The robot according to the preceding embodiment, wherein in the first state, the control system, particularly the safety supervision system, is configured for limiting a velocity of the manipulator in proximity to at least one boundary surface of the surface set so as to enable the manipulator to stop in case of a human reaching through the at least one boundary surface without injuring the human.
R49. The robot according to any of the preceding embodiments and with the features of embodiment R31, wherein the control system is configured for detecting a second state.
R50. The robot according to the preceding embodiment, wherein the second state and the first state are mutually exclusive.
R51. The robot according to any of the 2 preceding embodiments and with the features of embodiment R22, wherein the safety supervision system is configured for detecting the second state.
R52. The robot according to the preceding embodiment, wherein in the second state, the control system, particularly the safety supervision system, is configured for not decelerating, particularly not stopping the operation of the manipulator in response to the boundary sensor system sensing an object intersecting with at least one boundary surface of the surface set.
R53. The robot according to any of the 4 preceding embodiments but the last and with the features of embodiment R4, wherein the control system, particularly the safety supervision system, is configured for detecting the second state for at least one of the boundary surfaces.
R54. The robot according to the preceding embodiment, wherein the control system, particularly the safety supervision system, is configured for detecting the second state independently for each of at least two of the boundary surfaces.
R55. The robot according to the preceding embodiment, wherein for each of the boundary surfaces, the first state and the second state are mutually exclusive.
R56. The robot according to any of the 3 preceding embodiments, wherein the control system, particularly the safety supervision system, is configured for not decelerating, particularly not stopping the operation of the manipulator in response to the boundary sensor system sensing an object intersecting with a boundary surface in the second state.
R57. The robot according to any of the preceding embodiments, wherein the robot comprises a manipulator sensing system configured for sensing an orientation and/or a pose of the at least one manipulator.
R58. The robot according to the preceding embodiment and with the features of embodiment R22, wherein the safety supervision system is configured for determining the second state of at least one of the boundary surfaces based on an orientation of a portion, such as an end portion, of the at least one manipulator.
R59. The robot according to any of the preceding embodiments with the features of R56, wherein the control system, particularly the safety supervision system, is configured for only not decelerating, particularly not stopping the operation of the manipulator in response to the boundary sensor system sensing an object intersecting with a boundary surface in the second state if at least one of the at least one manipulator intersects with the boundary surface.
R60. The robot according to the preceding embodiment and with the features of embodiment R57, wherein the safety supervision system is configured for determining whether the at least one of the at least one manipulator intersects with the boundary surface.
R61. The robot according to any of the preceding embodiments with the features of embodiment R49, particularly R51, wherein the control system, particularly the safety supervision system, is configured for detecting the second state if a docking condition is satisfied in proximity of an interaction location.
R62. The robot according to any of the preceding embodiments with the features of embodiment R49, particularly R51, wherein the robot is configured for sensing a marker element associated with the interaction location, and wherein the docking condition relates at least to a presence of said marker element.
R63. The robot according to the preceding embodiment, wherein the marker element comprises a portion comprising optically encoded data, such as a barcode or a QR-code, wherein the robot is configured for sensing the optically encoded data, and wherein the docking condition relates at least to the optically encoded data.
R64. The robot according to the preceding embodiment, wherein the robot comprises a camera configured for sensing the optically encoded data.
R65. The robot according to any of the 3 preceding embodiments, wherein the marker element comprises a reflecting portion and wherein the robot comprises a reflection sensing unit configured for sensing a presence of the reflecting portion.
R66. The robot according to the preceding embodiment, wherein the docking condition relates at least to the presence of the reflecting portion.
R67. The robot according to any of the 2 preceding embodiments, wherein the robot, particularly the safety supervision system, is further configured for determining an orientation of the reflecting portion with respect to the robot.
R68. The robot according to any of the 3 preceding embodiments, wherein the reflection sensing unit is mounted to the manipulator.
R69. The robot according to any of the 4 preceding embodiments, wherein the reflection sensing unit comprises a redundant sensor.
R70. The robot according to any of the 5 preceding embodiments, wherein the reflection sensing unit is configured for emitting polarised light.
R71. The robot according to any of the 6 preceding embodiments, wherein the reflection sensing unit is configured for sensing polarised light.
R72. The robot according to the 2 preceding embodiments, wherein the reflection sensing unit is configured for sensing polarised light corresponding to a reflection of the emitted polarised light.
R73. The robot according to any of the 8 preceding embodiments, wherein the reflecting portion is configured for retroreflection.
R74. The robot according to any of the preceding embodiments with the features of embodiment R49, particularly R62, wherein the robot is configured for sensing a distance to a portion of the interaction location, particularly to the marker element.
R75. The robot according to the preceding embodiment, wherein the docking condition relates at least to the distance to the portion of the interaction location, particularly to the distance to the marker element.
R76. The robot according to any of the two preceding embodiments, wherein the robot comprises a redundant distance sensor configured for sensing the distance.
R77. The robot according to any of the preceding embodiments with the features of embodiment R62, wherein the marker element comprises a wireless data element configured for wireless identification, such as an RFID-tag, an NFC-tag or a wireless network-access point, wherein the robot is configured for receiving wireless data from the wireless data element, and wherein the docking condition relates at least to the wireless data .
R78. The robot according to the preceding embodiment, wherein the wireless data element is an passive element, such as an RFID-tag or an NFC-tag, and wherein the robot comprises an wireless reader configured for reading data from the passive element, such as an RFID-reader or an NFC reader.
R79. The robot according to any of the preceding embodiments with the features of at least one of R77 and R63, wherein the docking condition comprises a data integrity condition relating to at least one of the optically encoded data and the wireless data.
R80. The robot according to any of the preceding embodiments, wherein the robot comprises an obstacle sensor configured for sensing obstacles, such as a safety laser scanner, particularly a substantially horizontally oriented safety laser scanner.
R81. The robot according to any of the preceding embodiments with the features of embodiment R61, wherein the robot is configured for sensing a contour of a portion of the interaction location, and wherein the docking condition relates at least to said contour.
R82. The robot according to the 2 preceding embodiments, wherein the obstacle sensor is configured for sensing the contour of the portion of the interaction location.
R83. The robot according to any of the 3 preceding embodiments, wherein the obstacle sensor is configured for sensing a presence of humans, and wherein the control system, particularly the safety supervision system, is configured for detecting the first state if the obstacle sensor senses a human in an area associated with the interaction location.
R84. The robot according to any of the preceding embodiments with the features of embodiment R61 and R27, wherein the non-redundant control system is configured for sending a docking signal to the safety supervision system, and wherein the docking condition relates at least to the docking signal.
R85. The robot according to any of the preceding embodiments with the features of embodiment R61, wherein the docking condition relates at least to a determined position of the robot, and wherein the control system is configured for determining the position of the robot.
R86. The robot according to the preceding embodiment and with the features of embodiment R27, wherein the non-redundant control system is configured for determining the position of the robot and for sending the determined position of the robot to the safety supervision system.
R87. The robot according to any of the preceding embodiments with the features of embodiment R63 and R85, wherein the control system, particularly the non-redundant control system, is configured for matching the determined position and a part of the optically encoded data.
R88. The robot according to any of the preceding embodiments with the features of embodiment R77 and R85, wherein the control system, particularly the non-redundant control system, is configured for matching the determined position and a part of the wireless data.
R89. The robot according to the preceding embodiment, wherein the control system, particularly the non-redundant control system, is configured for matching a part of the part of the wireless data to map data corresponding to the determined position.
R90. The robot according to any of the preceding embodiments with the features of the R65 and R85, wherein the control-system, particularly the non-redundant control system, is configured for matching the presence of the reflecting portion to map data corresponding to the determined position.
R91. The robot according to any of the 4 preceding embodiments, wherein the docking condition relates at least to a success of the matching.
R92. The robot according to any of the preceding embodiments with the features of embodiment R63 and R77, wherein the control system, particularly the non-redundant control system, is configured for matching a part of the wireless data and a part of the optically encoded data, and wherein the docking condition relates at least to a success of the matching.
R93. The robot according to any of the preceding embodiments, wherein the at least one manipulator is configured for handling items, particularly boxes and/or containers.
R94. The robot according to any of the preceding embodiments, wherein the robot comprises a storage unit configured for storing the items, particularly the boxes and/or containers.
R95. The robot according to the two preceding embodiments, wherein the at least one manipulator is configured for storing the items in the storage unit and/or retrieving the items from the storage unit.
R96. The robot according to any of the preceding embodiments, wherein the at least one manipulator comprises a conveyor belt.
R97. The robot according to any of the preceding embodiments, wherein the robot is a freely moving robot.
   In other words, the robot may not be a stationary robot, such as an industrial 6-axes-robot.
R98. The robot according to any of the preceding embodiments with the features of embodiment R31, particularly with the features of embodiment R19, wherein at least one of the manipulator is configured for moving along an axis, such as a linear axis, particularly a vertically oriented linear axis.
R99. The robot according to the preceding embodiment, wherein in the first state, the control system, particularly the safety supervision system, is configured for limiting the velocity of the manipulator in proximity to at least one end of the axis, such as an upper and/or a lower end of the axis.
R100. The robot according to any of the 2 preceding embodiments, wherein the control system, particularly the safety supervision system, is configured for limiting the velocity of the manipulator in proximity to at least one end of the axis to the safety threshold velocity.
R101. The robot according to any of the preceding embodiments with the features of R73, wherein the reflecting portion comprises a coefficient of luminous intensity of at least 60 cd/(lx*m²), preferably at least 180 cd/(lx*m²).
   Below, use embodiments will be discussed. The use embodiments are abbreviated by the letter "U" followed by a number. Whenever reference is herein made to the "use embodiments", these embodiments are meant.
U1. Use of the robot according to any of the robot embodiments for providing items to at least one production station in a production facility.
U2. Use of the robot according to any of the robot embodiments for transporting items in a warehouse.
   Below, system embodiments will be discussed. The system embodiments are abbreviated by the letter "S" followed by a number. Whenever reference is herein made to the "system embodiments", these embodiments are meant.
S1. A system, comprising a plurality of interaction locations, particularly handover stations, and at least one robot according to any of the robot embodiments, wherein the at least one robot is configured for picking and/or putting items at the handover locations.
S2. The system according to the preceding system embodiment, wherein at least one of the interaction locations, particularly the handover stations, comprises a marker element, and wherein the at least one robot is according to robot embodiment R62 or any of its dependent embodiments.
S3. The system according to the preceding system embodiment, wherein the marker element comprises a portion comprising optically encoded data, such as a barcode or a QR-code, and wherein the at least one robot is according to robot embodiment R63 or any of its dependent embodiments.
S4. The system according to any of the 2 preceding system embodiments, wherein the marker element comprises a reflecting portion, and wherein the at least one robot is according to R65 or any of its dependent embodiments.
S5. The system according to the preceding embodiment, wherein the reflecting portion is configured for specular reflection.
S6. The system according to any of the 2 preceding system embodiments, wherein the reflecting portion is configured for retroreflection.
S7. The system according to the preceding embodiment, wherein the reflecting portion comprises a coefficient of luminous intensity of at least 60 cd/(lx*m²), preferably at least 180 cd/(lx*m²).
S8. The system according to any of the 6 preceding system embodiments, wherein the marker element comprises a wireless data element configured for wireless identification, such as an RFID-tag, an NFC-tag or a wireless network-access point, and wherein the at least one robot is according to R77 or any of its dependent embodiments.
   Below, embodiments of a method will be discussed. These embodiments are abbreviated by the letter "M" followed by a number. Whenever reference is herein made to the "method embodiments", these embodiments are meant.
M1. A method for operating a robot, the method comprising using a robot comprising
   - a housing,
   - at least one manipulator,
   - a control system,
   - a safety volume enclosed at least by a surface set comprising at least one boundary surface, and
   - a boundary sensor system.
M2. The method according to the preceding embodiment, wherein the safety volume is enclosed by at least one portion of the housing and the surface set.
M3. The method according to any of the preceding method embodiments, wherein the robot comprises a mobile base.
M4. The method according to any of the preceding method embodiments, wherein the surface set comprises a plurality of boundary surfaces.
M5. The method according to any of the preceding method embodiments, wherein the safety volume comprises the manipulator in a configuration of the manipulator, particularly in a retracted configuration of the manipulator.
M6. The method according to any of the preceding method embodiments and with the features of embodiment M3, wherein in a use configuration of the robot, a vertical projection of the safety volume is located within a vertical projection of the mobile base.
M7. The method according to any of the preceding method embodiments, wherein the housing of the robot comprises at least one opening, wherein the at least one opening particularly is plurality of openings, and wherein each boundary surface is associated with an opening.
M8. The method according to any of the preceding method embodiments, wherein a plurality of intersecting boundary surfaces forms a continuous part of a surface of the safety volume.
M9. The method according to any of the preceding method embodiments, wherein the method comprises the robot moving and end portion of the manipulator through at least one of the boundary surfaces.
M10. The method according to any of the preceding method embodiments, wherein the method comprises the boundary sensor system monitoring at least one boundary surface of the surface set.
M11. The method according to the preceding method embodiment, wherein the method comprises the boundary sensor system sensing a presence of an object intersecting with at least one boundary surface of the surface set.
M12. The method according to any of the two preceding embodiments and with the features of method embodiment M7, wherein the method comprises the boundary sensor system monitoring all substantially vertical boundary surfaces of the surface set.
M13. The method according to the preceding embodiment, wherein the method comprises the boundary sensor system monitoring at least all boundary surfaces inclined at most 10°, preferably at most 30° and still more preferably at most 45° with respect to a vertical axis.
M14. The method according to any of the preceding method embodiments with the features of embodiment M10, wherein a vertical projection of the at least one monitored boundary surface and a vertical projection of the housing form a contour enclosing at least 180°, preferably at least 270° and still more preferably 360° of the manipulator in the retracted configuration.
M15. The method according to any of the preceding method embodiments, wherein the boundary sensor system comprises at least one photoelectric sensor, wherein the at least one photoelectric sensor is preferably a plurality of photoelectric sensors.
M16. The method according to the preceding embodiment, wherein the method comprises the at least one photoelectric sensor sensing objects intersecting with a part of a plane.
M17. The method according to any of the 2 preceding embodiments with the features of embodiments M10, wherein in or in the vicinity of each of the at least one monitored boundary surface of the surface set, at least one of the at least one photoelectric sensor is placed.
In other words, the method may comprise using a robot comprising at least one of the at least one photoelectric sensor in or in the vicinity of each of the at least one monitored boundary surface of the surface set.
M18. The method according to any of the 3 preceding embodiments, wherein the at least one photoelectric sensor comprises at least one of a light curtain and a time-of-flight safety laser scanner.
M19. The method according to any of the preceding method embodiments with the features of method embodiment M15, wherein the at least one photoelectric sensor is operated in fail-to-safety operation.
M20. The method according to any of the preceding method embodiments with the features of embodiment M15, wherein the method comprises the at least one photoelectric sensor detecting objects comprising a diameter of at least 14 mm.
M21. The method according to any of the preceding method embodiments with the features of method embodiment M15, wherein each of the at least one photoelectric sensor is a redundant photoelectric sensor.
M22. The method according to any of the preceding method embodiments, wherein the control system comprises a safety supervision system.
M23. The method according to the preceding method embodiment, wherein the safety supervision system is a redundant control system.
M24. The method according to any of the 2 preceding method embodiments, wherein the method comprises the safety supervision system detecting a presence of a fault of at least one sensor connected to the safety supervision system.
M25. The method according to any of the preceding method embodiments, particularly with the features of embodiment M22, wherein the boundary sensor system comprises a connection to the control system, particularly to the safety supervision system.
M26. The method according to the preceding embodiment, wherein the boundary control system comprises a redundant connection to the control system, particularly to the safety supervision system.
M27. The method according to any of the preceding method embodiments, wherein the control system comprises a non-redundant control system.
M28. The method according to any of the preceding method embodiments, particularly according to the preceding embodiment, wherein the method comprises the control system, particularly the non-redundant control system, controlling an operation of the manipulator.
M29. The method according to the preceding embodiment, wherein the method comprises the control system, particularly the non-redundant control system, controlling the manipulator so as to pick and/or put items.
M30. The method according to any of the preceding 3 embodiments, wherein the non-redundant control system comprises a PC, such as an industrial PC.
M31. The method according to any of the preceding method embodiments and with the features of embodiment M10, wherein the method comprises the control system decelerating, particularly stopping in a first state the operation of the manipulator if the boundary sensor system senses an object intersecting with at least one of the at least one monitored boundary surface.
M32. The method according to the preceding embodiment and with the features of embodiment M22, wherein the method comprises the safety supervision system decelerating, particularly stopping in the first state the operation of the manipulator.
   In other words, the method may comprise the safety supervision system carrying out the decelerating, particularly stopping of M31.
M33. The method according to any of the 2 preceding embodiments, wherein the manipulator comprises a brake, and wherein the decelerating, particularly stopping comprises activating the brake of the manipulator.
M34. The method according to any of the 3 preceding embodiments, wherein the decelerating, particularly stopping comprises controlling a motor so as to stop or decelerate at least a part of the operation of the manipulator.
M35. The method according to the preceding embodiment, wherein the method comprises the control system, particularly the non-redundant control system, controlling said motor so as to stop or decelerate at least the part of the operation of the manipulator.
M36. The method according to any of the 2 preceding embodiments, wherein the method comprises the control system, particularly the safety supervision system, monitoring a movement of the manipulator.
M37. The method according to any of the 6 preceding embodiments, wherein the decelerating, particularly stopping comprises deactivating a power supply of a motor of the manipulator.
M38. The method according to the penultimate embodiment with the features of method embodiments M37 and M23, wherein the method comprises the control system, particularly the safety supervision system, performing at least one of deactivating a power supply of the motor of the manipulator and activating the brake of the manipulator,
   if the movement of the manipulator does not correspond to the controlling of the motor.
M39. The method according to any of the 8 preceding method embodiments, wherein decelerating the operation of the manipulator comprises decelerating a movement of the manipulator below a safety threshold velocity.
M40. The method according to any of the preceding method embodiments and with the features of method embodiments M3 and M31, wherein the method comprises in the first state, the safety supervision system decelerating, particularly stopping the mobile base if the boundary sensor system senses an object intersecting with at least one of the at least one monitored boundary surface of the surface set.
M41. The method according to any of the preceding method embodiments and with the features of method embodiment M3, wherein the mobile base comprises a traction system comprising at least one traction unit, wherein the at least one traction unit preferably is a plurality of traction units, wherein the method comprises the traction system propelling the robot.
M42. The method according to the preceding embodiment and with the features of embodiment M22, wherein the method comprises the safety supervision system deactivating a power supply to at least a part of the traction system.
M43. The method according to any of the 2 preceding embodiments, wherein the traction units are omnidirectional drive modules.
M44. The method according to any of the 3 preceding embodiments but the last, wherein the traction system comprises conventional wheels.
M45. The method according to the preceding embodiment, wherein the robot is a differential wheeled robot.
M46. The method according to any of the preceding method embodiments and with the features of method embodiments M31 and M41, wherein the method comprises in the first state, the safety supervision system inhibiting a movement of the mobile base by the traction system,
   if the boundary sensor system senses an object intersecting with at least one of the at least one monitored boundary surface of the surface set and the mobile base is stationary.
M47. The method according to any of the preceding method embodiments with the features of embodiment M31, particularly with the features of embodiment M19, wherein the method comprises in the first state the control system, particularly the safety supervision system, limiting a velocity of the manipulator in proximity to at least one boundary surface of the surface set, particularly to the safety threshold velocity.
M48. The method according to the preceding embodiment, wherein the method comprises in the first state the control system, particularly the safety supervision system, limiting a velocity of the manipulator in proximity to at least one boundary surface of the surface set so as to enable the manipulator to stop in case of a human reaching through the at least one boundary surface without injuring the human.
M49. The method according to any of the preceding method embodiments and with the features of embodiment M31, wherein the method comprises the control system detecting a second state.
M50. The method according to the preceding embodiment, wherein the second state and the first state are mutually exclusive.
M51. The method according to any of the 2 preceding embodiments and with the features of embodiment M22, wherein the safety supervision system detects the second state.
M52. The method according to the preceding embodiment, wherein the method comprises in the second state the control system, particularly the safety supervision system, not decelerating, particularly not stopping the operation of the manipulator in response to the boundary sensor system sensing an object intersecting with at least one boundary surface of the surface set.
M53. The method according to any of the 4 preceding method embodiments but the last and with the features of embodiment M4, wherein the method comprises the control system, particularly the safety supervision system, detecting the second state for at least one of the boundary surfaces.
M54. The method according to the preceding embodiment, wherein the method comprises the control system, particularly the safety supervision system, detecting the second state independently for each of at least two of the boundary surfaces.
M55. The method according to the preceding embodiment, wherein for each of the boundary surfaces, the first state and the second state are mutually exclusive.
M56. The method according to any of the 3 preceding embodiments, wherein the method comprises the control system, particularly the safety supervision system not decelerating, particularly not stopping the operation of the manipulator in response to the boundary sensor system sensing an object intersecting with a boundary surface in the second state.
M57. The method according to any of the preceding method embodiments, wherein the robot comprises a manipulator sensing system, and wherein the method comprises the manipulator sensing system sensing an orientation and/or a pose of the at least one manipulator.
M58. The method according to the preceding embodiment and with the features of method embodiment M22, wherein the method comprises the safety supervision system determining the second state of at least one of the boundary surfaces based on an orientation of a portion, such as an end portion, of the at least one manipulator.M59. The method according to any of the preceding method embodiments with the features of M56, wherein the method comprises the control system, particularly the safety supervision system, only not decelerating, particularly not stopping the operation of the manipulator in response to the boundary sensor system sensing an object intersecting with a boundary surface in the second state, if at least one of the at least one manipulator intersects with the boundary surface.
   In other words, the method may comprise the control system, particularly the safety supervision system, verifying whether the manipulator intersects with the boundary surface if the boundary sensor system senses an object intersecting with a boundary surface in the second state and decelerating, particularly stopping the operation of the manipulator in this case, if the manipulator does not intersect with the boundary surface.
M60. The method according to the preceding embodiment and with the features of method embodiment M57, wherein the method comprises the safety supervision system determining whether the at least one of the at least one manipulator intersects with the boundary surface.
M61. The method according to any of the preceding method embodiments with the features of method embodiment M49, particularly M51, wherein the method comprises the control system, particularly the safety supervision system, detecting the second state if a docking condition is satisfied in proximity of an interaction location.
M62. The method according to any of the preceding method embodiments with the features of embodiment M49, particularly M51, wherein the method comprises the robot sensing a marker element associated with the interaction location, and wherein the docking condition relates at least to a presence of said marker element.
M63. The method according to the preceding embodiment, wherein the marker element comprises a portion comprising optically encoded data, such as a barcode or a QR-code, wherein the method comprises the robot sensing the optically encoded data, and wherein the docking condition relates at least to the optically encoded data.
M64. The method according to the preceding embodiment, wherein the robot comprises a camera, and wherein the method comprises the camera sensing the optically encoded data.
M65. The method according to any of the 3 preceding embodiments, wherein the marker element comprises a reflecting portion and wherein the robot comprises a reflection sensing unit, wherein the method comprises the reflection sensing unit sensing a presence of the reflecting portion.
M66. The method according to the preceding embodiment, wherein the docking condition relates at least to the presence of the reflecting portion.
M67. The method according to any of the 2 preceding embodiments, wherein the method comprises the robot, particularly the safety supervision system, determining an orientation of the reflecting portion with respect to the robot.
M68. The method according to any of the 3 preceding embodiments, wherein the reflection sensing unit is mounted to the manipulator.
M69. The method according to any of the 4 preceding embodiments, wherein the reflection sensing unit comprises a redundant sensor.
M70. The method according to any of the 5 preceding embodiments, wherein the method comprises the reflection sensing unit emitting polarised light.
M71. The method according to any of the 6 preceding embodiments, wherein the method comprises the reflection sensing unit sensing polarised light.
M72. The method according to the 2 preceding embodiments, wherein the method comprises the reflection sensing unit sensing polarised light corresponding to a reflection or a retroreflection of the emitted polarised light.
M73. The method according to any of the 8 preceding embodiments, wherein the method comprises the reflecting portion retroreflecting light.
M74. The method according to any of the preceding embodiments with the features of embodiment 47, particularly M62, wherein the method comprises the robot sensing a distance to a portion of the interaction location, particularly to the marker element.
M75. The method according to the preceding embodiment, wherein the docking condition relates at least to the distance to the portion of the interaction location, particularly to the distance to the marker element.
M76. The method according to any of the two preceding embodiments, wherein the robot comprises a redundant distance sensor, and wherein the redundant distance sensor senses the distance.
M77. The method according to any of the preceding method embodiments with the features of method embodiment M62, wherein the marker element comprises a wireless data element configured for wireless identification, such as an RFID-tag, an NFC-tag or a wireless network-access point, wherein the method comprises the robot receiving wireless data from the wireless data element, and wherein the docking condition relates at least to the wireless data.
M78. The method according to the preceding embodiment, wherein the wireless data element is a passive element, such as an RFID-tag or an NFC-tag, and wherein the robot comprises an wireless reader, such as an RFID-reader or an NFC-reader, and wherein the method comprises the wireless reader reading data from the passive element..
M79. The method according to any of the preceding method embodiments with the features of at least one of M77 and M63, wherein the docking condition comprises a data integrity condition relating to at least one of the wireless data and optically encoded data.
M80. The method according to any of the preceding method embodiments, wherein the robot comprises an obstacle sensor, such as a safety laser scanner, particularly a substantially horizontally oriented safety laser scanner, and wherein the method comprises the obstacle sensor sensing obstacles.
M81. The method according to any of the preceding method embodiments with the features of method embodiment M61, wherein the method comprises the robot sensing a contour of a portion of the interaction location, and wherein the docking condition relates at least to said contour.
M82. The method according to the 2 preceding embodiments, wherein the obstacle sensor senses the contour of the portion of the interaction location.
M83. The method according to any of the 3 preceding method embodiments, wherein the method comprises the obstacle sensor sensing a presence of humans, and wherein the method comprises the control system, particularly the safety supervision system, detecting the first state if the obstacle sensor senses a human in an area associated with the interaction location.
M84. The method according to any of the preceding method embodiments with the features of method embodiment M61 and M27, wherein the method comprises the non-redundant control system sending a docking signal to the safety supervision system, and wherein the docking condition relates at least to the docking signal.
M85. The method according to any of the preceding method embodiments with the features of embodiment M61, wherein the docking condition relates at least to a determined position of the robot, and wherein the method comprises the control system determining the position of the robot.
M86. The method according to the preceding embodiment and with the features of method embodiment M27, wherein the method comprises the non-redundant control system determining the position of the robot and sending the determined position of the robot to the safety supervision system.
M87. The method according to any of the preceding method embodiments with the features of embodiment M63 and M85, wherein the method comprises the control system, particularly the non-redundant control system, matching the determined position and a part of the optically encoded data.
M88. The method according to any of the preceding method embodiments with the features of method embodiment M77 and M85, wherein the method comprises the control system, particularly the non-redundant control system, matching the determined position and a part of the wireless data.
M89. The method according to the preceding embodiment, wherein the method comprises the control system, particularly the non-redundant control system, matching a part of the part of the wireless data to map data corresponding to the determined position.
M90. The method according to any of the preceding method embodiments with the features of the M65 and M85, wherein the method comprises the control-system, particularly the non-redundant control system, matching the presence of the reflecting portion to map data corresponding to the determined position.
M91. The method according to any of the 4 preceding embodiments, wherein the docking condition relates at least to a success of the matching.
M92. The method according to any of the preceding method embodiments with the features of embodiment M63 and M77, wherein the method comprises the control system, particularly the non-redundant control system, matching a part of the wireless data and a part of the optically encoded data, and wherein the docking condition relates at least to a success of the matching.
M93. The method according to any of the preceding method embodiments, wherein the method comprises the at least one manipulator handling items, particularly boxes and/or containers.
M94. The method according to any of the preceding method embodiments, wherein the robot comprises a storage unit, and wherein the method comprises storing the items, particularly the boxes and/or containers, in the storage unit.
M95. The method according to the two preceding embodiments, wherein the method comprises the at least one manipulator storing the items in the storage unit and/or retrieving the items from the storage unit.
M96. The method according to any of the preceding method embodiments, wherein the at least one manipulator comprises a conveyor belt.
M97. The method according to any of the preceding embodiments, wherein the robot is a freely moving robot.
M98. The method according to any of the preceding embodiments with the features of embodiment M31, particularly with the features of embodiment M19, wherein the method comprises moving at least one of the at least one manipulator along an axis, such as a linear axis, particularly a vertically oriented linear axis.
M99. The method according to the preceding embodiment, wherein the method comprises the control system, particularly the safety supervision system, limiting the velocity of the manipulator in proximity to at least one end of the axis, such as an upper and/or a lower end of the axis, in the first state.
M100. The method according to any of the 2 preceding embodiments, wherein the method comprises the control system, particularly the safety supervision system, limiting the velocity of the manipulator in proximity to at least one end of the axis to the safety threshold velocity.
M101. The method according to any of the preceding method embodiments with the features of embodiment M73, wherein the reflecting portion comprises a coefficient of luminous intensity of at least 60 cd/(lx*m²), preferably at least 180 cd/(lx*m²).
M102. The method according to any of the preceding method embodiments, wherein the method comprises using a robot according to any of the preceding robot embodiments.
R102. The robot according to any of the preceding robot embodiments, wherein the robot is configured for performing the method according to any of the preceding method embodiments.
   Below, embodiments of a computer program product will be discussed. These embodiments are abbreviated by the letter "C" followed by a number. Whenever reference is herein made to the "computer program product embodiments", these embodiments are meant.
C1. A computer program product comprising instructions which, when the program is executed by a control system of a robot according to any of the robot embodiments, cause the robot to execute the steps of the method according to any of the method embodiments.

### Brief description of the figures

- Fig. 1: shows an embodiment of a robot with improved safety.
- Fig. 2: shows another embodiment of the robot.
- Fig. 3: shows a scheme of an embodiment of the robot.
- Fig. 4: shows a further, alternative embodiment of the robot.
- Fig. 5: shows a scheme of connections of elements of the robot.

### Detailed figure description

For the sake of clarity, some features may only be shown in some figures, and others may be omitted. However, also the omitted features may be present, and the shown and discussed features do not need to be present in all embodiments.

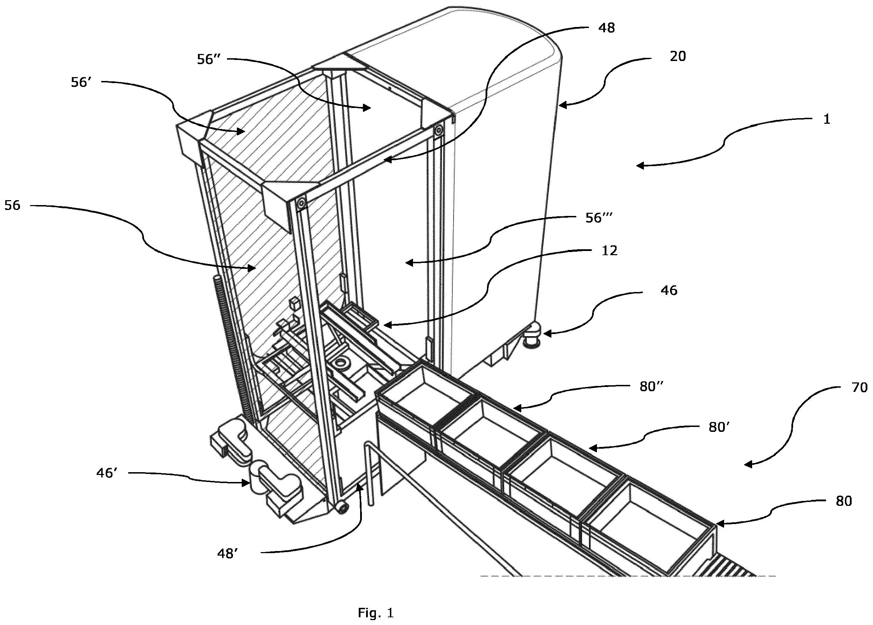

Figure 1 shows an embodiment of a robot 1. The robot comprises a storage unit 20 configured for storing items 80, 80', 80", such as containers, particularly small load carriers (SLCs).

The robot 1 further comprises a manipulator 12. In the example of Fig. 1, the manipulator 12 is adapted for handling the items 80, e.g. the SLCs.

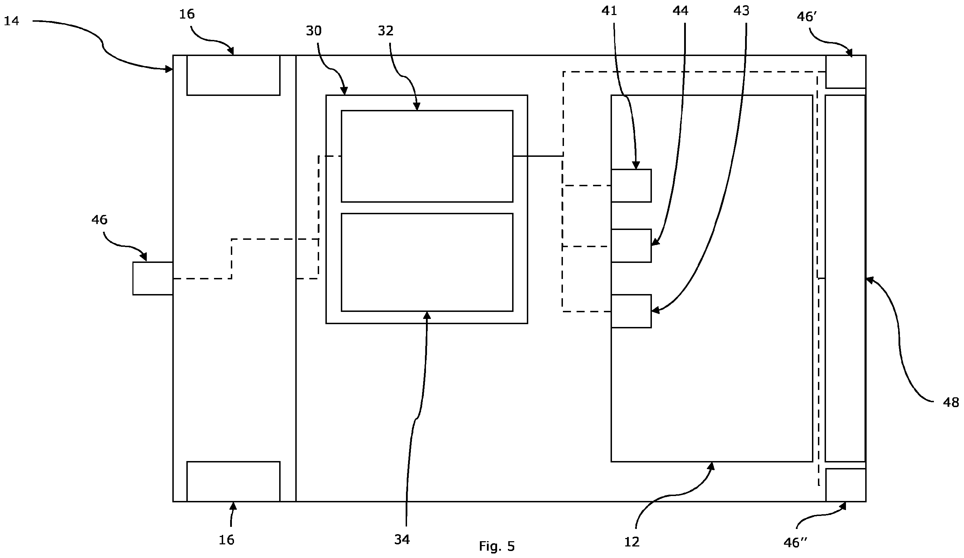

The robot comprises a housing, a surface set and a boundary sensor system. The surface set comprises at least one or a plurality of boundary surfaces. In the example of Fig. 1, 5 boundary surfaces can be seen. Each boundary surface is associated with an opening 56, 56', 56", 56''' of the robot. In some cases, more than one boundary surface may be associated with an opening.

For example, a plurality of boundary surfaces may be located one above another. In this example, a rectangular opening parallel to a vertically oriented plane may for example be divided in ladder-like boundary surfaces. However, the person skilled in the art will easily understand that other arrangements, particularly other divisions of an opening in boundary surfaces may also be possible.

However, in the example of Fig. 1, each opening also corresponds to one of the boundary surfaces.

Five openings can be seen: two openings corresponding to substantially horizontal planes above and below the manipulator 12, and three openings 56, 56', 56'" corresponding to substantially vertically oriented planes.

Together with a portion of the housing of the robot, the boundary surfaces corresponding to the openings enclose a safety volume. The safety volume comprises the manipulator 12 in at least one configuration of the manipulator, e.g. in a retracted configuration, as shown in the example of Fig. 1.

The housing may comprise a height of about 2,15 m, a length of about 2,3 m and a width of about 1,05 m.

The robot 1 shown in Fig. 1 is configured for working in an environment where humans may be present, e.g. in a production facility or a warehouse.

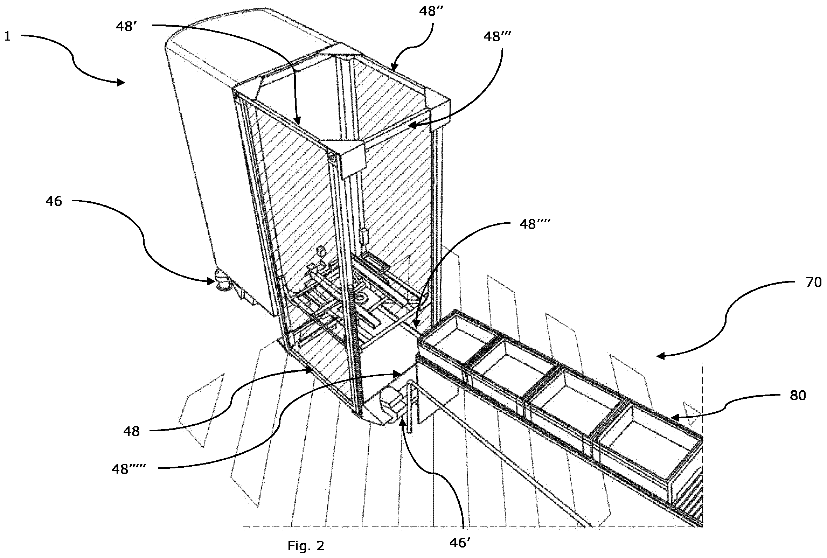

The robot 1 comprises a boundary sensor system configured for monitoring at least one boundary surface of the robot. The boundary sensor system will be discussed in more detail with respect to Fig. 2. In the example of Fig. 1, the boundary sensor system is configured for monitoring the vertical boundary surfaces corresponding to the vertical openings 56, 56', 56'" Corresponding to substantially vertical planes

As set out above, the boundary sensor system may be configured for monitoring at least one boundary surface. A monitored boundary surface may be a boundary surface which the boundary sensor system is configured to monitor.

In at least one state, e.g. a first state, which may correspond to an undocked or normal state of operation, the robot may be configured for decelerating, particularly for stopping an operation of the manipulator 12 if the boundary sensor system senses a presence of an object intersecting with at least one monitored boundary surface.

In the embodiment shown in Fig. 1, decelerating, particularly stopping the manipulator in case of an object intersecting with at least one of the monitored boundary surfaces may optionally advantageously avoid injuries of nearby humans or damages to the robot or its environment.

Additionally, the disclosed robot may allow access to the manipulator 12 by an operator without a risk of crushing, as the manipulator may be decelerated, particularly stopped, when the operator reaches into the robot. Thus, maintenance and/or debugging of the robot may be facilitated.

Also, the robot 1 may not need a mobile portion of its housing which is configured to be opened when the manipulator manipulates items 80 outside of the robot, e.g. grips containers or puts containers, and for separating the manipulator and the environment of the robot otherwise. Hence, a complexity of the housing and/or a number of moving parts may be reduced. In consequence, a fail safety of the robot may be increased.

In another state, such as a second state, which may correspond to a docked state of the robot, the robot may not be configured for decelerating, particularly stopping the operating of the manipulator 12 in response to the boundary sensor system sensing an object interesting with at least one of the monitored surfaces. This may for example be the case if the robot comprises only one monitored surface.

The robot 1 may be configured to detect the second state e.g. next to an interaction location 70, such as a shelf or storage space for the items 80, 80', 80", 80''' or an assembly post to which items are delivered and/or from which items are picked up.

Alternatively, as shown in Fig. 1, the robot may be configured for detecting the second state independently for different boundary surfaces or openings. In other words, for at least one boundary surface, the robot may detect the first state, such as boundary surfaces corresponding to the openings 56 and 56' in Fig. 1, and for at least one other boundary surface, such as a boundary surface corresponding to opening 56''', the robot may detect the second state. The robot may be configured for not decelerating, particularly not stopping the operation of the manipulator if an object intersects with at least one of the monitored boundary surfaces for which the second state was detected. In Fig. 1, a hatching of the surfaces 56 and 56' indicates that the robot is configured for decelerating, particularly stopping the operation of the manipulator 12 if an object intersects with any of these boundary surfaces.

However, in the example of Fig. 1, the robot 1 is not configured for decelerating, particularly stopping the operation of the robot in response to an object intersecting with at least one of the monitored boundary surfaces 56"'. In Fig. 1, this monitored surface is indicated by the absence of the hatching. In the example of Fig. 1, said boundary surface 56''' is adjacent to a portion of the interaction location 70.

As set out above, the robot may be configured for determining the first and the second state independently for at least two of the boundary surfaces. In other words, the robot may be configured for determining the second state for at least one boundary surface, in the example of Fig. 1 for the boundary surface corresponding to opening 56'''. The robot may be configured for not determining the second state for at least one other boundary surface, in the example of Fig. 1, for the boundary surface corresponding to the openings 56, 56'.

Independently determining the state is intended to mean that for different boundary surfaces, the robot may be configured for determining different states. However, the robot may be configured for using a result of at least one step of the determining for more than one boundary surface.

Fig. 2 shows another embodiment of the robot 1. Some or all of the features may correspond to the embodiment shown in Fig. 1. However, some of the features may also be different from the embodiment shown in Fig. 2.

The robot 1 in Fig. 2 comprises the boundary sensor system. The boundary sensor system comprises at least one or a plurality of sensors configured for monitoring at least one boundary surface. In the example of Fig. 2, the boundary sensor system comprises a plurality of photoelectric sensors 48, 48', 48", 48''', 48"", 48'''''.

In the example of Fig. 2, the photoelectric sensors are light curtains, i.e. plurality of light barriers mounted so as to monitor a presence of an object intersecting with a surface. Such light curtains are for example available from SICK AG, 79183 Waldkirch, Germany. The light curtains may be safety light curtains. The safety light curtains may comprise an improved fail safety. The light curtains may be arranged so as to detect objects comprising a diameter of at least 14 mm. However, alternatively or additionally, at least one safety scanner may be used as photoelectric sensor for monitoring at least one or a plurality of boundary surfaces.

In the example of Fig. 2, the photoelectric sensors 48, 48', 48", 48''', 48'''', 48''''' are configured for monitoring the monitored boundary surfaces corresponding to the openings 56, 56', 56". The boundary surfaces and the portion of the housing of the robot enclose the safety volume, as detailed with respect to Fig. 1.

The robot of Fig. 2 comprises at least one obstacle sensor 46. The obstacle sensor may be at least one safety laser scanner. Such safety laser scanners are e.g. available from SICK AG, 79183 Waldkirch, Germany.

The obstacle sensor 46 may be configured for monitoring a proximity of the robot for obstacles. The robot 1 may be configured for navigating based on data generated by the obstacle sensor 46.

In the example of Fig. 2, the robot 1 is configured for decelerating, particularly for stopping the operation of the manipulator 12 in response to an object intersecting with at least one of the boundary surfaces for which the first state was detected. In the example of Fig. 2, the robot 1 may not be configured for decelerating, particularly for stopping the operation of the manipulator 12 in response to an object intersecting with the vertical boundary surface facing the interaction location, for which the second state was detected. This behavior and its advantages may correspond to the behavior discussed in the context of Fig. 1.

The robot 1 of Fig. 2 is optionally configured for monitoring a proximity of the robot 1 when the robot is next to the interaction location 70. In the example of Fig. 2, the monitored area corresponds to the boldly hatched area marked on the ground, or at least a section of this area.

The robot 1 is configured for sensing a human present in the monitored area. In response to a presence of the human in the monitored area, the robot 1 of Fig. 2 is configured to either deactivate the second state (e.g. by detecting the first state), and/or for decelerating, particularly for stopping the operation of the manipulator 12.

This may be optionally advantageous, since decelerating/decelerating the manipulator 10 and/or detecting the first state in response to a human being present in the monitored area may optionally increase a safety at interaction locations 70. For example, accidents due to an operator reaching into items 80 manipulated by the robot 1 may be reduced. Also, this feature may optionally allow for excluding a presence of a human at positions where the human could reach into a trajectory of the manipulator picking or putting objects through a boundary surface for which the second state was detected, e.g. by reaching around the robot.

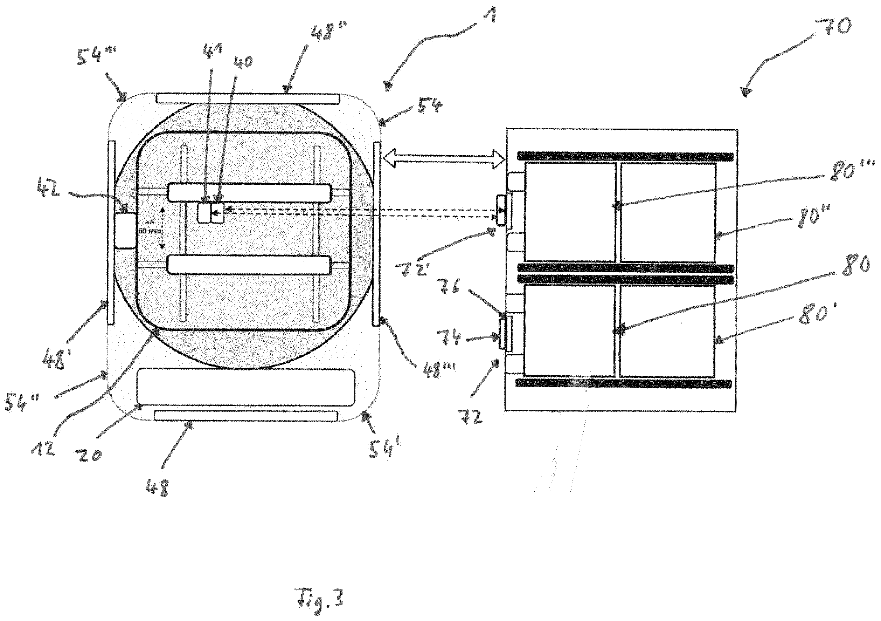

Fig. 3 shows a scheme of an embodiment of the robot 1 next to the interaction location 70.

The robot 1 comprises the storage unit 20, such as a shelf unit. The shelf unit 20 may be similar to the shelf unit described in European Patent Application 1615220.7. As all other features in Fig. 3, the storage unit is shown in a schematic way. The storage unit may be sufficiently wide to accommodate at least one, preferably more than one item next to each other. For exemplary dimensions of the storage unit, see e.g. Fig. 1 and Fig. 2.

The robot 1 further comprises the manipulator 12.

In the example of Fig. 3, the robot 1 comprises the housing comprising a plurality of housing elements 54, 54', 54", 54"', which may be connected. The housing comprises the plurality of openings, of which a plurality, in the example of Fig. 3 four openings, are oriented substantially vertically. In other words, a plurality of the openings corresponds to substantially vertical planes.

The robot of Fig. 3 comprises the boundary sensor system, which boundary sensor system is configured for monitoring the substantially vertically oriented boundary surfaces. The boundary sensor system comprises a plurality of photoelectric sensors 48, 48', 48", 48'''. In the vicinity of each of the monitored boundary surfaces, at least one of the photoelectric sensors may be located, particularly two photoelectric sensors in the case of light curtains. However, in one example, a photoelectric sensor or a pair of photoelectric sensors may monitor more than one boundary surface. For example, in case of a light curtain whose elements are mounted vertically, the light curtain may monitor a plurality of boundary surfaces located one above another. For example, groups of neighboring emitters and reflectors/receivers may respectively correspond to boundary surfaces.

The interaction location 70 comprises a plurality of items 80, 80', 80", 80'''. In Fig. 3, the interaction location 70 comprises a shelf in which the items 80 are stored. However, the robot may be configured for interacting with different interaction locations 70, such as handover tables, tugger trains or conveyor belts, too.

Further, the interaction location 70 shown in Fig. 3 comprises at least one marker element 72, 72'. In the example of Fig. 3, the robot 1 is configured for sensing a presence of the at least one marker element 72. The robot is further configured for detecting the second state only if it has sensed the presence of the at least one marker element 72. This may be optionally advantageous for increasing a safety of operation of the robot 1, since it may reduce false detections of the second state.

At least one of the marker elements 72, 72' comprises a portion with optically encoded data 74. In the example of Fig. 3, the optically encoded data are machine-readable. The optically encoded data may for example be encoded by means of a QR-code or a barcode.

In some cases, each marker element 72, 72' comprises such a portion with optically encoded data 74.

The robot 1 comprises an optical data sensor 42 configured for sensing the portion with the optically encoded data 74. The robot 1 is configured for decoding the optically encoded data. The optical data sensor 42 may be attached to the manipulator. This may be optionally advantageous, as it allows for sensing marker elements 72 at different locations relative to the robot.

Further, in Fig. 3, at least one of the marker elements 72, 72' comprises a reflecting portion 76. Particularly, the reflecting portion may comprise a retro-reflecting surface. In other words, the reflecting portion may be configured for retroreflection.

The robot 1 comprises a reflection sensing unit 40. The robot is configured for sensing a presence of the reflecting portion 76 by means of the reflection sensing unit 40. An example of the robot sensing the reflecting portion 76 is indicated in Fig. 3 by means of a dashed arrow connecting the reflection sensing unit and the reflecting portion.

A reflecting portion may optionally advantageously allow for localisation of the robot and/or for thus increasing a fail-safety of a localisation of the robot, e.g. next to an interaction location. This may be optionally advantageous for increasing a safety of the operation of the robot 1, since it may reduce false detections of the second state.

In the example of Fig. 3, the reflection sensing unit is configured for emitting polarized light. The reflection sensing unit is further configured for sensing a presence of polarized light, particularly polarized light corresponding to a specular reflection or retroreflection of the emitted polarized light. The reflecting portion may comprise at least one of a corner reflector, a cat's eye-reflector, a phase-conjugate mirror, and a patch of retro-reflective tape.

Emitting polarized light and sensing polarized light corresponding to a retroreflection of the emitted light may be optionally advantageous for avoiding false detection of a reflecting portion, e.g. due to an object comprising a highly reflective surface configured for diffuse reflection. This may be optionally advantageous for increasing a safety of the operation of the robot 1, since it may reduce false detections of the second state.

Corresponding sensing units are available e.g. from Leuze electronic GmbH & Co. KG, 73277 Owen, Germany.

The robot being configured for sensing at least one of the reflecting portion 76 and the portion comprising the optically encoded data 74 may be optionally advantageous so as to avoid a false detection of the second state and increasing a safety of the operation of the robot.

The robot 1 further comprises a distance sensor 41. The distance sensor 41 is configured for sensing a distance between the distance sensor 41 and the marker element 72, 72', particularly the element comprising the optically encoded data. The robot 1 of Fig. 3 is configured for only detecting the second state if a distance of the robot to the marker element 72, 72' is below a pre-determined threshold, e.g. 0,5 meter.

This may optionally advantageously increase the fail safety of the robot, as false detections of the second state, e.g. due to unexpected light conditions, may be avoided.

The robot 1 may comprise any type of manipulator. The manipulator may for example comprise at least one of a gripper, a conveyor belt, a vacuum gripper, and a magnetic gripping device. The manipulator may comprise at least one of a telescoping bar and a rotatable joint. The manipulator may for example comprise a robotic arm.

In the example of Fig. 3, the manipulator 12 comprises at least one, particularly at least two conveyor belts configured for handling the items, e.g. the containers. The at least one conveyor belt is configured two be moved along a first axis of the manipulator facing towards the item.

Further, in the Fig. 3, the at least one conveyor belt is the at least two conveyor belts, and the at least two conveyor belts are configured for being moved along a second axis with respect to each other. Particularly, the conveyor belts may be configured for being moved along said seconds axis at least 50 mm with respect to each other. This may be optionally advantageous to allow handling items of different dimensions and/or shape. Further, this may be optionally advantageous for compensating for navigation errors and/or positioning errors of the robot with respect to the interaction location 70.

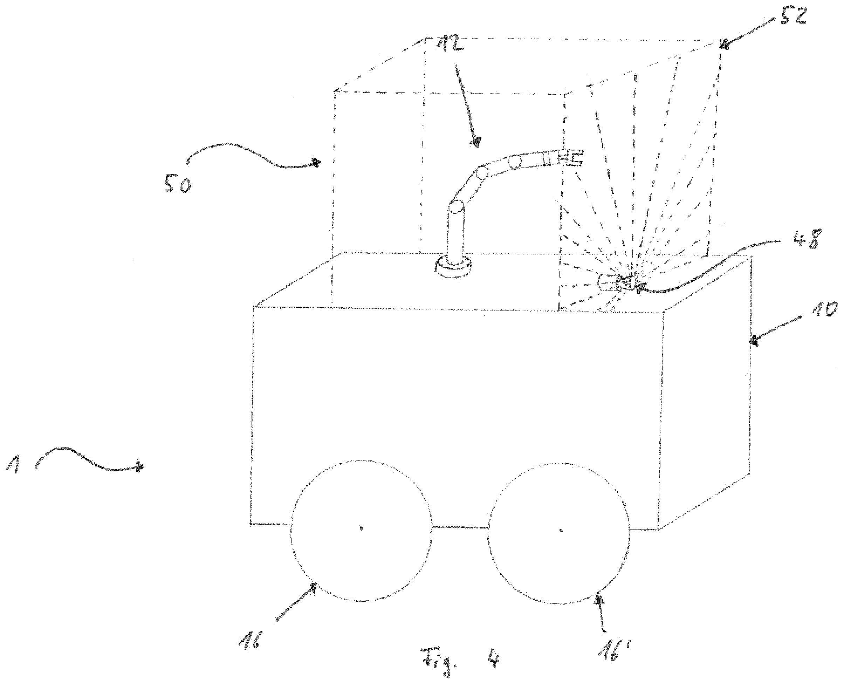

Fig. 4 shows an alternative embodiment of the robot 1.

The robot 1 of Fig. 4 comprises a traction system 14. The traction comprises at least one traction unit 16, 16', such as a motor connected to a wheel. The at least one traction unit 16, 16' may be a plurality of traction units. The plurality of traction units may be a plurality of omnidirectional drive modules.

Omnidirectional drive modules comprise a powered wheel that can be actively rotated around a substantially vertical axis. Hence, the robot can be controlled so as to move in any direction. Swerve Drive is an example of an omnidirectional drive. Omnidirectional drive modules are available i.a. as "Swerve & Steer" from AndiMark Inc., 1900 E. Nort St., Kokomo, IN 46901, United States of America, and as "Omni-Drive-Module" from Neobotix, 74080 Heilbronn, Germany.

Optionally advantageously, omnidirectional drive modules may comprise a greater durability than omnidirectional wheels.

The robot 1 further comprises a mobile base 1 and a manipulator 12. The manipulator 12 is connected with the mobile base 10, e.g. mounted on the mobile base 10. The robot 1 comprises the housing and the boundary sensor system. The boundary sensor system comprises the at least one photoelectric sensor 48.

In the example of Fig. 4, the boundary sensor system comprises a safety laser scanner 48.

The robot further comprises the safety volume 50 comprising the manipulator 12 in at least one configuration. In the embodiment shown in Fig. 4, the safety volume 50 is enclosed by a plurality of boundary surfaces 52 and a portion of the housing of the robot 1.

In Fig. 4, a boundary surface 52 is shown. The boundary surface is monitored by the safety laser scanner. In the example of Fig. 4, portions of the boundary sensor system configured for monitoring other boundary surfaces 52 are omitted, however, they may be present. In particular, the boundary sensor system may comprise further photoelectric sensors 48, particularly for monitoring other substantially vertically oriented surfaces enclosing the safety volume.

Using safety laser scanners for monitoring at least one boundary surface may be optionally advantageous, as the safety volume 50 may comprise edges or corners that are not enclosed by a portion of the housing of the robot. Hence, the safety volume 50 may optionally advantageously be at least one of bigger and more flexible than a safety volume whose edges are defined by housing portions.

Fig. 5 shows an exemplary scheme of a connection of elements of the robot 1.

The robot 1 comprises the traction system 14 comprising the at least one traction unit 16. The robot 1 comprises the at least one obstacle sensor 46, 46', 46".

Further, the robot comprises the manipulator 12.

The robot also comprises the distance sensor 41, a manipulator sensing system 43 and a wireless reader 44, such as a radio-frequency signal sensor. The wireless reader 4444 is configured for communication with RFID-elements, such as RFID-tags. The manipulator sensing system 43 is configured for sensing at least a component of a pose of the manipulator 12, such as a height with respect to a retracted position or a rotation with respect to a normal configuration.

The robot of Fig. 5 comprises a control system 30.

The control system 30 comprises a safety supervision system 32. The safety supervision system 32 may comprise an increased fail safety, e.g. by being configured for redundant operation and/or fail-to-safety design. For example, the safety supervision system 32 may comprise a Flexi Soft safety controller, available from SICK AG, 79183 Waldkirch, Germany.

Further, the control system in Fig. 5 comprises a non-redundant control system 34. The non-redundant control system 34 in Fig. 5 is configured for performing operations such as planning a behavior of the robot and communicating with other data-processing systems outside the robot, e.g. a warehouse management system.

The safety supervision system is configured for performing certain operations, comprising at least monitoring a movement of at least a portion of the manipulator. The safety supervision system may also be configured for generating instructions for decelerating, particularly for stopping the operation of the manipulator 12 as discussed above and evaluating data from the boundary sensor system.

Generating the instructions for decelerating, particularly for stopping of the manipulator 12 by the safety supervision system 32 may be optionally advantageous, as it increases a fail safety of the decelerating, particularly stopping function of the robot and hence improves a safety of the robot 1.

Performing at least of planning the behavior of the robot and communicating with other system by means of the non-redundant control system 34 may be optionally advantageous, since a complexity of a software of the safety supervision system 32 may be reduced.

Further, the person skilled in the art easily understands that for a software comprising a given complexity, an execution by a redundant and/or fail-to-safety designed control system is technically more demanding than an execution by a non-redundant control system. Hence, performing operations which may be less safety relevant by the non-redundant control system 34 and operations which may have a direct relevance for a safety of the robot 1 by the safety supervision system 32 may allow for a more efficient design of the control system 30.

The control system 30, particularly the non-redundant control system 32, may comprise one or more processing units configured to carry out computer instructions of a program (i.e. machine readable and executable instructions). The processing unit(s) may be singular or plural. For example, the control system 30, particularly the non-redundant control system 32 may comprise at least one of CPU, GPU, DSP, APU, ASIC, ASIP or FPGA. The control system 30, particularly the non-redundant control system 32 may comprise memory components, such as, main memory (e.g. RAM), cache memory (e.g. SRAM) and/or secondary memory (e.g. HDD, SDD). The control system 30, particularly the non-redundant control system 32 may comprise volatile and/or non-volatile memory such an SDRAM, DRAM, SRAM, Flash Memory, MRAM, F-RAM, or P-RAM. The control system 30, particularly the non-redundant control system 32 may comprise internal communication interfaces (e.g. busses) configured to facilitate electronic data exchange between components of the control system 30, particularly the non-redundant control system 32, such as, the communication between the memory components and the processing components. The control system 30, particularly the non-redundant control system 32 may comprise external communication interfaces configured to facilitate electronic data exchange between the control system 30, particularly the non-redundant control system 32 and devices or networks external to the control system 30. For example, the control system 30, particularly the non-redundant control system 32 may comprise network interface card(s) that may be configured to connect the control system 30, particularly the non-redundant control system 32 to a network, such as, to the Internet or an intranet, e.g. a warehouse intranet or an intranet of a production facility. The control system 30, particularly the non-redundant control system 32 may be configured to transfer electronic data using a standardized communication protocol. The control system 30, particularly the non-redundant control system 32 may be a centralized or distributed computing system.

In the example of Fig. 5, the non-redundant control system 32 comprises a data connection to the safety supervision system 34 configured for data transfer, e.g. for output of a state of the manipulator 12 instructed by the safety supervision system 32.

The control system 30, particularly the safety supervision system 32, may comprise a data-processing system. The safety supervision system 32 may comprise a microcontroller. The safety supervision system 32 may also comprise a micro-processor.

The safety supervision system 32 may also comprise a portion of a circuit, such as an integrated circuit (IC) or a printed circuit board (PCB). The safety supervision system 32 may be a processing unit or a system-on-chip that may be interfaced with the robot 1 and/or at least one component of the robot 1.

The safety supervision system 32 may also comprise further means of data processing, such as, processor units and/or hardware accelerators. The safety supervision system 32 may comprise memory components, such as, main memory (e.g. RAM), cache memory (e.g. SRAM) and/or secondary memory (e.g. flash memory, HDD, SDD). The safety supervision system 32 may comprise busses configured to facilitate data exchange between components of the safety supervision system 32, and/or to facilitate data exchange between the safety supervision system 32 and other components of the robot.

While in the above, a preferred embodiment has been described with reference to the accompanying drawings, the skilled person will understand that this embodiment was provided for illustrative purpose only and should by no means be construed to limit the scope of the present invention, which is defined by the claims.

Whenever a relative term, such as "about", "substantially" or "approximately" is used in this specification, such a term should also be construed to also include the exact term. That is, e.g., "substantially straight" should be construed to also include "(exactly) straight".

Whenever steps were recited in the above or also in the appended claims, it should be noted that the order in which the steps are recited in this text may be accidental. That is, unless otherwise specified or unless clear to the skilled person, the order in which steps are recited may be accidental. That is, when the present document states, e.g., that a method comprises steps (A) and (B), this does not necessarily mean that step (A) precedes step (B), but it is also possible that step (A) is performed (at least partly) simultaneously with step (B) or that step (B) precedes step (A). Furthermore, when a step (X) is said to precede another step (Z), this does not imply that there is no step between steps (X) and (Z). That is, step (X) preceding step (Z) encompasses the situation that step (X) is performed directly before step (Z), but also the situation that (X) is performed before one or more steps (Y1), ..., followed by step (Z). Corresponding considerations apply when terms like "after" or "before" are used.

### Reference signs

- 1: Robot
- 10: Mobile Base
- 12: Manipulator
- 14: Traction system
- 16: Traction unit
- 20: Storage unit
- 30: Control system
- 32: Safety supervision system
- 34: Non-redundant control system
- 40: Reflection sensing unit
- 41: Distance sensor
- 42: Optical data sensor
- 43: Manipulator sensing system
- 44: Wireless reader
- 46: Obstacle sensor
- 48: Photoelectric sensor
- 50: Safety volume
- 52: Boundary surface
- 54: Housing element
- 56: Opening
- 70: Interaction location
- 72: Marker element
- 74: Optically encoded data
- 76: Reflecting portion
- 80: Item

## Claims

1. A robot, comprising
- a housing,
- at least one manipulator,
- a control system configured for controlling the manipulator,
- a safety volume enclosed at least by a surface set comprising at least one boundary surface,
- a boundary sensor system, and
- a mobile base
wherein, particularly the safety volume is enclosed by at least one portion of the housing and the surface set.

2. The robot according to the preceding claim, wherein the housing of the robot comprises at least one opening, wherein the at least one opening particularly is plurality of openings, and wherein each boundary surface is associated with an opening,
wherein the boundary sensor system is configured for monitoring at least one boundary surface of the surface set, and
wherein the boundary sensor system is configured for sensing a presence of an object intersecting with at least one boundary surface of the surface set.

3. The robot according to any of the preceding claims, wherein the boundary sensor system comprises at least one photoelectric sensor, wherein the at least one photoelectric sensor is preferably a plurality of photoelectric sensors and
wherein in a first state, the control system is configured for decelerating, particularly for stopping an operation of the manipulator if the boundary sensor system senses an object intersecting with at least one of the at least one monitored boundary surface.

4. The robot according to any of the 2 preceding claims, wherein the control system comprises a safety supervision system and a non-redundant control system,
wherein in the first state, the safety supervision system is configured for decelerating, particularly for stopping the operation of the manipulator if the boundary sensor system senses an object intersecting with at least one of the at least one monitored boundary surface.

5. The robot according to any of the preceding 2 claims, wherein in the first state, the safety supervision system is configured for decelerating, particularly for stopping the mobile base if the boundary sensor system senses an object intersecting with at least one of the at least one monitored boundary surface of the surface set.

6. The robot according to any of the preceding three claims, wherein the control system, particularly the safety supervision system, is configured for detecting a second state, and wherein
- either, in the second state, the control system, particularly the safety supervision system, is configured for not decelerating, particularly for not stopping the operation of the manipulator in response to the boundary sensor system sensing an object intersecting with at least one boundary surface of the surface set; or
- the at least one boundary surface is a plurality of boundary surfaces, and wherein the control system, particularly the safety supervision system, is configured for detecting the second state for at least one of the boundary surfaces, and
the control system, particularly the safety supervision system, is configured for not decelerating, particularly for not stopping the operation of the manipulator in response to the boundary sensor system sensing an object intersecting with a boundary surface in the second state.

7. The robot according to the preceding claim, wherein the control system, particularly the safety supervision system, is configured for detecting the second state if a docking condition is satisfied in proximity of an interaction location, and
wherein the robot is configured for sensing a marker element associated with the interaction location, and wherein the docking condition relates at least to a presence of said marker element.

8. The robot according to the preceding claim,
wherein the marker element comprises a portion comprising optically encoded data, wherein the robot is configured for sensing the optically encoded data, and wherein the docking condition relates at least to the optically encoded data, and/or
wherein the marker element comprises a reflecting portion and wherein the robot comprises a reflection sensing unit configured for sensing a presence of the reflecting portion, and/or
wherein the marker element comprises a wireless data element configured for wireless identification, such as an RFID-tag, an NFC-tag or a wireless network-access point, wherein the robot is configured for receiving wireless data from the wireless data element, and wherein the docking condition relates at least to the wireless data.

9. The robot according to any of the three preceding claims,
wherein
- the docking condition relates at least to a determined position of the robot, and wherein the control system is configured for determining the position of the robot and/or,
- the robot is configured for sensing a distance to a portion of the interaction location, particularly to the marker element.

10. A system, comprising a plurality of interaction locations, particularly handover stations, and at least one robot according to any of the preceding claims, wherein the at least one robot is configured for picking and/or putting items at the handover locations.

11. A method for operating a robot, the robot comprising
- a housing,
- at least one manipulator,
- a control system,
- a safety volume enclosed at least by a surface set comprising at least one boundary surface,
- a boundary sensor system and,
- a mobile base,
wherein particularly, the safety volume is enclosed by at least one portion of the housing and the surface set.

12. The method according to the preceding claim, wherein the method comprises the boundary sensor system monitoring at least one boundary surface of the surface set,
wherein the housing of the robot comprises at least one opening, wherein the at least one opening particularly is plurality of openings, and wherein each boundary surface is associated with an opening, and
wherein the method comprises the boundary sensor system sensing a presence of an object intersecting with at least one boundary surface of the surface set.

13. The method according to the preceding claim, wherein the method comprises the control system decelerating, particularly stopping in a first state the operation of the manipulator if the boundary sensor system senses an object intersecting with at least one of the at least one monitored boundary surface,
wherein the method comprises the control system detecting a second state,
wherein particularly, the safety supervision system detects the second state.

14. The method according to the preceding claim, wherein the method comprises the robot sensing a marker element associated with the interaction location, and wherein the docking condition relates at least to a presence of said marker element.

15. The method according to any of the two preceding claims, wherein the method comprises the robot sensing a distance to a portion of the interaction location, particularly to the marker element.

16. A computer program product comprising instructions which, when the program is executed by a control system of a robot according to any of claims 1 to 9, cause the robot to execute the steps of the method according to any of claims 10-15.
